(19) Europäisches Patentamt
European Patent Office
Office européen des brevets

(11) **EP 4 425 389 A1**

(12) **EUROPEAN PATENT APPLICATION**

(43) Date of publication:
**04.09.2024 Bulletin 2024/36**

(21) Application number: **23159103.3**

(22) Date of filing: **28.02.2023**

(51) International Patent Classification (IPC):
**G06N 10/40** (2022.01)          **G06N 10/70** (2022.01)

(52) Cooperative Patent Classification (CPC):
**G06N 10/70; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ETH Zurich**
**8092 Zürich (CH)**

(72) Inventors:
• **KRINNER, Sebastian**
  **8820 Wädenswil (CH)**

• **LACROIX, Nathan**
  **8057 Zurich (CH)**
• **HOFELE, Luca**
  **8049 Zurich (CH)**
• **WALLRAFF, Andreas**
  **8044 Zurich (CH)**

(74) Representative: **Detken, Andreas**
  **Isler & Pedrazzini AG**
  **Giesshübelstrasse 45**
  **Postfach 1772**
  **8027 Zürich (CH)**

(54) **APPARATUS AND METHOD FOR LEAKAGE REDUCTION IN A QUANTUM COMPUTING DEVICE**

(57)    An apparatus comprises a qubit (100), a resonator structure (200) coupled to the qubit, and a frequency-modulation device (300) coupled to the qubit. For converting leakage errors into errors in the computational subspace, the frequency modulation device applies a frequency modulation pulse to the qubit, which causes periodic modulation of the qubit frequency. The frequency modulation pulse is applied in such a manner that population transfer between a leakage state and the first excited qubit state is facilitated while population transfer between the computational states of the qubit is suppressed.

FIG. 1

**Description**

TECHNICAL FIELD

The present invention relates to an apparatus comprising a qubit and a resonator structure, the apparatus being configured to convert leakage errors in the qubit into errors in the computational subspace, and to a corresponding method.

PRIOR ART

Quantum computers hold the promise of solving computational problems that are intractable using conventional methods. A quantum computer performs calculations using qubits - the quantum counterpart of bits in conventional computers. A qubit has two "computational states": a ground state and an excited state. The computational states are separated by a frequency spacing that is called the "qubit frequency". Operations in a quantum computer are performed by manipulating the computational states.

In quantum computers, errors can occur due to unavoidable decoherence and due to limited accuracy when qubits are manipulated. For correcting such errors, quantum error correction (QEC) protocols are known. In QEC protocols, auxiliary qubits interact with data qubits to measure the parity of subsets of data qubits.

QEC protocols typically rely on the assumption that the qubits are two-level systems. In practice, however, most qubits are part of a larger multi-level system. For example, a superconducting transmon qubit behaves as a weakly anharmonic oscillator, having a plurality of further excited states above the computational states. As another example, a trapped ion qubit has many hyperfine states in addition to the computational states. In such multi-level systems, the states that are not used for quantum computations are called "non-computational states". The computational states span a vector space called the "computational subspace".

The term "leakage" is used for the phenomenon that, for various reasons, the state of a qubit can change from a computational state to a non-computational state, thus "leaking" from the computational subspace. Accordingly, a non-computational state may also be called a "leakage state". Finite leakage rates are likely unavoidable in realistic experimental settings. A "leakage error" is an error that results from leakage. Both experimental and theoretical investigations have shown that leakage errors can be detrimental to QEC.

For mitigating the effects of leakage errors, so-called "leakage reduction units" have been devised. A leakage reduction unit (LRU) is a device or protocol that transfers a leakage state back into the computational subspace, thus converting a leakage error into an error in the computational subspace, where it can subsequently be corrected by a QEC protocol. In the following, the term "leakage reduction" is used as a short-hand expression for a method in which leakage errors are converted into errors in the computational subspace.

Several challenges remain in the design of LRUs. For example, LRUs that are based on a full reset of the qubit can only be applied to auxiliary qubits, but cannot be applied to data qubits because when the qubit is in a computational state other than the ground state, the computational state is destroyed by the LRU. However, it is desirable to be able to apply an LRU not only to auxiliary qubits, but also to data qubits. Another challenge is the decoherence that may occur both on the qubits that are undergoing an LRU operation and on the qubits that are idling during the LRU operation. For minimizing decoherence, an LRU operation should be as fast as possible. However, most known leakage reduction protocols require a comparatively large amount of time.

SUMMARY OF THE INVENTION

It is an object of the present invention to provide an apparatus that is able to convert leakage errors in a qubit into errors in the computational subspace while keeping computational states intact. It is another object of the present invention to provide an apparatus that is able to convert leakage errors into errors in the computational subspace in a short amount of time. These and other objects are achieved by an apparatus having the features of claim 1. Further embodiments of the invention are laid down in the dependent claims.

An apparatus is provided, comprising:

a qubit facilitating occupation of at least one of a plurality of qubit states, the qubit states including two computational states and a first leakage state, the computational states including a qubit ground state and a first excited qubit state spaced from the qubit ground state by a qubit frequency, the first leakage state being spaced from the first excited qubit state by a frequency spacing that is different from the qubit frequency;

a resonator structure coupled to the qubit, the resonator structure having at least one resonator mode, the resonator mode having a resonator frequency;

a frequency modulation device coupled to the qubit, the frequency modulation device being configured to apply a frequency modulation pulse to the qubit, the frequency modulation causing a periodic modulation of the qubit frequency,
wherein the frequency modulation device is configured to apply the frequency modulation pulse in such a manner that population transfer between the first leakage state and the first excited qubit state is facilitated while population transfer between the computational states is suppressed.

The apparatus enables efficient and fast population transfer from a non-computational state to a computational state while keeping the computational subspace intact. The non-computational state that is depleted in this manner is called the "first leakage state" to distinguish it from other non-computational states that may or may not be present, as will be discussed below. For effecting the population transfer, the apparatus comprises a frequency modulation device that modulates the qubit frequency in a time-dependent, controlled manner. The frequency modulation induces a time-dependent parametric coupling defined in the interaction picture of quantum mechanics (in the following referred to as an "interaction pulse") between a first tensor product state and a second tensor product state. In the first tensor product state, the first leakage state is occupied and the resonator mode is not populated with any elementary excitations ("photons") or populated with a finite number of photons. In the second tensor product state, the first excited qubit state is occupied and the resonator mode is populated with one additional photon as compared to the first tensor product state. By virtue of the interaction pulse, controlled population transfer from the first leakage state to the first excited qubit state can take place while the number of photons in the resonator mode increases by one. As the transition is a first-order transition, the population transfer can be achieved in a shorter amount of time than with schemes that rely on a second-order transition. Population transfer between the computational states is suppressed. This is possible because the qubit is anharmonic, i.e., the frequency spacing between the first leakage state and the first excited qubit state is different from the qubit frequency, and it is therefore possible to apply the frequency modulation selectively in such a manner that it drives only the desired transition between the first leakage state and the first excited qubit state, without substantially driving undesired transitions between the computational states. Likewise, population transfer from the first leakage state to the qubit ground state is preferably suppressed.

In contrast to leakage mitigation schemes that rely on full qubit reset, the apparatus selectively acts on the first leakage state only, without acting on the computational states. This has two key advantages. First, it makes the protocol universal, i.e. it can be applied both to data qubits and auxiliary qubits in QEC protocols. Second, it makes the operation fast. In practice, the operation can be made faster by up to a factor of about 10 as compared to leakage mitigation schemes that rely on full qubit reset.

Also disclosed is a corresponding method for leakage reduction in an apparatus comprising a qubit and a resonator structure, the qubit facilitating occupation of at least one of a plurality of qubit states, the qubit states including two computational states and a first leakage state, the computational states including a qubit ground state and a first excited qubit state, wherein the first excited qubit state is spaced from the qubit ground state by a qubit frequency, and wherein the first leakage state is spaced from the first excited qubit state by a frequency spacing that is different from the qubit frequency, the resonator structure having at least one resonator mode at a resonator frequency. The method comprises applying a frequency modulation pulse to the qubit, the frequency modulation pulse causing a periodic modulation of the qubit frequency. The frequency modulation pulse is applied in such a manner that population transfer between the first leakage state and the first excited qubit state is facilitated while population transfer between the computational states is suppressed.

For effecting efficient population transfer from the first leakage state to the first excited qubit state, the frequency modulation pulse may modulate the qubit frequency with a frequency modulation tone at a qubit modulation frequency that is determined according to a difference between the resonator frequency and a time-averaged frequency spacing between the first leakage state and the first excited qubit state during application of the frequency modulation pulse. In particular, the qubit modulation frequency may essentially correspond to said difference, deviating from said difference by a deviation that is less than a linewidth of the resonator mode. In other embodiments, the qubit modulation frequency may essentially correspond to an integer fraction of said difference, in particular, to half said difference, one third of said difference or one quarter of said difference. In such embodiments, a higher harmonic of the frequency modulation tone, in particular the second, third or fourth harmonic, is employed for effecting the population transfer.

For improving suppression of population transfer between the computational states, the frequency modulation pulse may be a shaped pulse, being shaped in such a manner that a bandwidth of the time-dependent parametric coupling (i.e., of the interaction pulse) is reduced. In particular, the frequency modulation pulse may be shaped in such a manner that a spectral component of the time-dependent parametric coupling is reduced at a detuning frequency that would induce a resonant parametric coupling between a third tensor product state and a fourth tensor product state, wherein in the third tensor product state, the first excited qubit state is occupied and the resonator mode is not populated with any photons or populated with a finite number of photons, and in the fourth tensor product state, the qubit ground state is occupied and the resonator mode is populated with one additional photon as compared to the third tensor product state.

In particular, the frequency modulation pulse may be shaped such that the time-dependent parametric coupling is a shaped interaction pulse that corresponds to a convolution of a rectangular interaction pulse with a filter kernel. The filter kernel may have a real component and a non-zero imaginary component, in particular an imaginary component that is proportional to a derivative of the real component. In this manner, a zero in the frequency spectrum of the interaction pulse at said detuning frequency which would otherwise induce a resonant parametric coupling between the third tensor product state and the fourth tensor product state can be engineered. The real component may be a Gaussian real component.

Shaping of the frequency modulation pulse may be effected by applying a real- or complex-valued filter kernel to a rectangular frequency modulation pulse, i.e., a frequency modulation pulse having an essentially rectangular envelope function, or to another rectangular pulse (i.e., another pulse having a rectangular envelope function) that causes the frequency modulation pulse, such as a rectangular flux modulation pulse, see below. Application of the filter kernel may comprise carrying out a convolution of the rectangular frequency modulation pulse or of the other rectangular pulse with the real- or complex-valued filter kernel. The filter kernel may be a real- or complex-valued Gaussian filter kernel.

For providing an interaction pulse with an engineered zero in its frequency spectrum, the frequency modulation pulse or the flux modulation pulse may correspond to a convolution of a rectangular frequency modulation pulse or rectangular flux modulation pulse with a complex-valued filter kernel having a real component and a non-zero imaginary (quadrature) component. The resulting shaped frequency modulation pulse has a finite rise time and a finite fall time. If the filter kernel is real-valued, only the pulse amplitude changes with time. If the filter kernel has a quadrature component, also the pulse phase changes with time.

In some embodiments, the frequency modulation pulse is applied in such a manner that, starting from an initial state in which the first leakage state is occupied and the resonator mode is not excited, an occupation probability of the first leakage state exhibits an underdamped oscillation as a function of time during the frequency modulation pulse. For minimizing the duration of the frequency modulation pulse, it is then advantageous that the frequency modulation pulse has a duration that is determined according to a time duration required for causing said underdamped oscillation to reach its first minimum as a function of time. In particular, the duration of the frequency modulation pulse may essentially correspond to said time duration for reaching the first minimum.

In some embodiments, the qubit is a superconducting qubit. The superconducting qubit may include at least one Josephson junction. For example, the superconducting qubit may broadly be classified as a phase qubit, a flux qubit, a charge qubit, or as a qubit type that is derived from one of these primary archetypes.

In some embodiments, the superconducting qubit may comprise a superconducting loop, the superconducting loop in particular including at least one Josephson junction. In some embodiments, the superconducting loop may be a SQUID loop. The SQUID loop may comprise one single Josephson junction (this also being called an AC or RF SQUID) or two Josephson junctions (this also being called a DC SQUID). In other embodiments, the superconducting loop may have a more complex configuration than a simple SQUID loop.

In some embodiments, the superconducting loop is an asymmetric SQUID loop comprising a first Josephson junction having a first Josephson energy and a second Josephson junction having a second Josephson energy, the second Josephson energy being different than the first Josephson energy. Preferably the first and second Josephson energies have a difference that is at least 50% of their arithmetic average. By using an asymmetric SQUID loop, the dependence of the qubit frequency on the magnetic flux through the SQUID loop is shallower than for a symmetric SQUID loop. This renders the qubit less susceptible to flux noise.

In some embodiments, the superconducting qubit may be a transmon qubit. A transmon qubit comprises a SQUID loop with one Josephson junction in each arm of the loop, and a shunted capacitor (see, e.g., J. Koch et al. "Charge-insensitive qubit design derived from the Cooper pair box". Physical Review A 76.4 (Oct. 2007). In some embodiments, the qubit may be a qubit that is derived from the transmon qubit, e.g., a so-called "weakly flux-tunable superconducting qubit" (see José M. Chávez-Garcia et al., "Weakly Flux-Tunable Superconducting Qubit", Phys. Rev. Applied 18, 034057 (2022)). In some embodiments the qubit may be a fluxonium qubit. A fluxonium qubit comprises a superconducting loop having a first arm with a single Josephson junction and a second arm with a series array of Josephson junctions (see, e.g., V. E. Manucharyan et al. "Fluxonium: Single Cooper-Pair Circuit Free of Charge Offsets". Science 326.5949 (Oct. 2009), 113).

In many superconducting qubits that comprise a superconducting loop, in particular, in superconducting qubits that comprise a superconducting loop with at least one Josephson junction in each arm of the loop, the qubit frequency depends on the magnetic flux through the superconducting loop. In such embodiments, the frequency modulation device may comprise a flux line that is coupled to the qubit in such a manner that a magnetic flux through the superconducting loop can be modulated using the flux line. In this manner, the qubit frequency can be modulated. In particular, the flux line may be coupled to the qubit via an inductive coupler. The flux line may also be used to apply a DC bias flux to the superconducting loop by applying a DC bias current to the flux line.

In some embodiments, the frequency modulation device comprises a waveform generator coupled to the flux line. The waveform generator may be configured (e.g., programmed) to generate a flux modulation pulse. The flux modulation pulse causes a modulation of the flux through the superconducting loop, which in turn causes a modulation of the qubit frequency. In this manner, the flux modulation pulse causes the frequency modulation pulse. In some embodiments, the waveform generator may be a so-called "arbitrary waveform generator" that is able to create essentially arbitrarily shaped flux modulation pulses within a given bandwidth. In other embodiments, the waveform generator may be a frequency generator coupled to a pulse shaper.

The frequency modulation device may modulate the magnetic flux through the superconducting loop symmetrically around a reference flux at which the qubit frequency has a local maximum or a local minimum as a function of the magnetic flux through the superconducting loop (a so-called "sweet spot frequency"). In particular, the qubit may idle at the sweet-spot frequency in the absence of the flux modulation pulse. By applying the flux modulation symmetrically around a sweet spot, the qubit is less susceptible to flux noise. The resulting qubit modulation frequency (i.e., the frequency with which the qubit frequency is modulated) corresponds to twice the frequency with which the flux is modulated. This reduces the required bandwidth of the flux modulation tone by a factor two compared to a qubit idling at a first-order-flux-sensitive frequency.

For minimizing flux noise-induced dephasing in the computational subspace during the operation, it may be advantageous to keep the modulation amplitude small. In particular, in some embodiments, the frequency modulation pulse causes the qubit frequency to be modulated with a modulation amplitude that is not more than 10%, preferably not more than 5% of the time-averaged qubit frequency during the frequency modulation pulse. The modulation amplitude may be defined as half of the difference between the maximum qubit frequency and the minimum qubit frequency during the frequency modulation pulse.

The frequency modulation also induces an off-resonant, approximately dispersive, parametric interaction between the above-mentioned third and fourth tensor product states, weakly hybridizing these two states. The weak hybridization in combination with the dissipative nature of the fourth tensor product state effectively induces decay from the first excited qubit state to the qubit ground state during qubit frequency modulation. This decay may be called Purcell-induced because it results from the coupling of the qubit to the resonator mode activated by the qubit frequency modulation. In order to suppress the aforementioned decay and in order to decrease the susceptibility to cross-driving a transition between the computational states, the resonator structure may comprise a first resonator coupled to the qubit and a second resonator coupled to the first resonator. In particular, the first resonator may be a readout resonator, and the second resonator may be a Purcell filter coupled to the readout resonator. The first and second resonators preferably have the same resonance frequency when uncoupled. The Purcell filter may be relatively narrow, having a bandwidth that is smaller than the absolute value of the anharmonicity of the qubit, the anharmonicity being defined as the difference between, on the one hand, the frequency spacing between the leakage state and the first excited qubit state and, on the other hand, the qubit frequency. For coupling the resonator structure (in particular, the first resonator) to the qubit and for coupling the second resonator to the first resonator, suitable couplers may be provided, for example coupling capacitors or inductive structures.

For facilitating dissipation of excitations of the resonator mode, a dissipative element may be coupled to the resonator structure, in particular, to the Purcell filter. The dissipative element may be, in particular, an element that either directly dissipates the energy of excitations of the resonator mode or that makes sure that an excitation that enters the dissipative element cannot return to the resonator mode. For example, the dissipative element may act as an Ohmic resistor, as a lossy capacitor or as a semi-infinite transmission line. The qubit may be provided on a substrate chip. The dissipative element may then be integrated on the same chip ("on-chip"), or it may be provided separately from said chip ("off-chip"). In some embodiments, the dissipative element comprises a feed line, which may also be used for reading out the qubit. For coupling the dissipative element to the resonator structure, a suitable coupler may be provided, for example a coupling capacitor, an inductive structure or a galvanic coupling.

In some embodiments, the first leakage state may be the second excited state of the qubit, and the qubit may have higher excited states forming further leakage states above the first leakage state. For example, the qubit may have a first leakage state and a second leakage state above the first leakage state, and possibly further leakage states above the second leakage state. The leakage operation may then be extended to transfer population from the second leakage state to the first leakage state before the population from the first leakage state is transferred to the first excited qubit state. To this end, the frequency modulation device may be configured to apply a preparatory pulse to the qubit before application of the frequency modulation pulse, the preparatory pulse causing a periodic modulation of the qubit frequency in such a manner that population transfer between the second leakage state and the first leakage state is facilitated while population transfer between the computational states and preferably also population transfer between the first leakage state and the computational states is suppressed.

Further disclosed is a method for quantum error correction, the method comprising:

coherently manipulating a plurality of qubits comprising at least one data qubit and at least one auxiliary qubit, each of the qubits being coupled to a resonator structure; and
applying the above-described method to at least one of the qubits.

The method may comprise applying a Z-gate, i.e., a rotation about the Z axis of the Bloch sphere, to compensate for deterministic phase errors acquired during application of the method for leakage reduction. The Z-gate may in particular be a virtual Z-gate. For the definition of a virtual Z-gate, see, e.g., David C. McKay et al., Phys. Rev. A 96, 022330 (2017).

The method may further comprise reading out the at least one auxiliary qubit.

In some embodiments, the method for leakage reduction ("LRU"), more specifically, the frequency modulation pulse, is applied to an auxiliary qubit immediately before the auxiliary qubit is read out. A Z-gate is not necessary in this case if the readout basis is the Pauli-Z basis. Applying the LRU to an auxiliary qubit immediately before readout may be advantageous because the resonator mode will generally be highly excited (occupied with many photons) during the readout operation anyway. It therefore does not matter if an excitation of the resonator mode due to the leakage reduction operation has not yet been dissipated to the environment. Furthermore, if the LRU was to follow the readout operation, as is typically the case for qubit reset protocols, any remaining excitations of the resonator mode ("leftover photons") from the readout operation would be directly converted into leakage errors again.

In other embodiments, the LRU may be applied to an auxiliary qubit at another location within a QEC cycle, for example immediately after the readout. This may be advantageous in some embodiments because readout itself might induce leakage. A Z-gate is not necessary either if the LRU is applied immediately after a readout in the Pauli-Z basis.

If the LRU is applied to a data qubit, the LRU may be positioned at any suitable location in the QEC cycle. The choice of location within the QEC cycle may be made, e.g., with a view to minimizing cycle length. In some embodiments, the LRU for a data qubit is applied directly after an operation which might induce leakage. The LRUs for different qubits do not need to be carried out simultaneously.

To make the operation even faster, the leakage reduction operation may be terminated (i.e., a subsequent operation may be performed on the qubit, such as a readout operation or a coherent manipulation of the qubit) within a time period after the frequency modulation pulse that is shorter than a decay time of the resonator mode. This is possible if the subsequent operations on the qubit are not significantly affected by the presence of an excitation of the resonator mode or if the leakage rate is sufficiently low.

BRIEF DESCRIPTION OF THE DRAWINGS

Embodiments of the invention are described in the following with reference to the drawings, which are for the purpose of illustrating embodiments of the invention and not for the purpose of limiting the same. In the drawings:

Fig. 1 shows an electrical circuit diagram of a qubit comprising a SQUID loop, the qubit being coupled to a resonator structure and a frequency modulation device;

Fig. 2 shows a diagram illustrating qubit frequency as a function of the magnetic flux applied to the SQUID loop of the qubit, together with a schematic illustration of a flux modulation pulse and the resulting frequency modulation pulse;

Fig. 3 shows an energy level diagram of the qubit of Fig. 1 coupled to a resonator mode of the resonator structure;

Fig. 4 shows a flow diagram illustrating a method of leakage reduction in a qubit;

Fig. 5 shows an image of a physical implementation of a transmon qubit;

Fig. 6 shows an enlarged image illustrating the SQUID loop of the transmon qubit and a flux line inductively coupled to the SQUID loop;

Fig. 7 shows a diagram illustrating the time dynamics of a leakage reduction unit (LRU);

Fig. 8 shows a diagram illustrating the duration of the LRU normalized to its minimum value (left vertical axis) and the readout resonator population after the LRU operation (right vertical axis) as a function of the ratio $\kappa/g$ (horizontal axis), the arrows indicating which curve belongs to which vertical axis;

Figs. 9A and 9B show diagrams illustrating the time evolution in the computational subspace during the LRU operation for a frequency modulation pulse filtered with a Gaussian with a width of $\sigma = 1$ ns (Fig. 9A) and with a width of $\sigma = 4$ ns (Fig. 9B);

Fig. 10 shows a diagram illustrating population loss of the state $|e, 0\rangle$ as a function of the duration of the LRU operation for filtering the rectangular interaction pulses with a Gaussian with a width of $\sigma$ = 1 ns and $\sigma$ = 4 ns, the Purcell-limited population loss being indicated with dashed lines;

Fig. 11 shows a diagram illustrating population loss of the state $|e, 0\rangle$ induced by a 100 ns-long LRU operation as a function of the width $\sigma$ of a Gaussian (filled circles) or DRAG (open circles) filter kernel applied to a rectangular interaction pulse, the Purcell-limited population loss for both cases being indicated with a dashed line;

Fig. 12 shows a diagram illustrating the measured time evolution of the populations of states $|g\rangle$, $|e\rangle$ and $|f\rangle$ of an actual transmon qubit initially prepared in state $|f\rangle$ under application of a flux modulation pulse with $\omega_p / 2\pi$ = 570 MHz and $\delta\omega / 2\pi$ = 110 MHz.

Fig. 13 shows a diagram illustrating the measured error of a LRU operation in the computational subspace, determined with an interleaved randomized benchmarking protocol, as a function of the width $\sigma$ of the Gaussian filter kernel applied to a rectangular flux pulse;

Fig. 14 shows a quantum circuit diagram of a weight-2 Z-type stabilizer circuit with one auxiliary qubit and two data qubits, including leakage reduction units;

Fig. 15 shows a diagram illustrating the measured average leakage population of the auxiliary qubit as a function of the number of quantum error correction cycles;

Fig. 16 shows a diagram illustrating the measured average leakage population of the data qubits as a function of the number of quantum error correction cycles.

Fig. 17 shows a further energy level diagram of the qubit of Fig. 1 coupled to the resonator mode to illustrate population transfer from higher excited states;

Fig. 18 shows a flow diagram illustrating a method of leakage reduction that includes sequential population transfer from higher excited states;

Fig. 19 shows a diagram comparing the resonant time dynamics of an LRU for two-mode and single-mode modeling of the readout circuit;

Fig. 20 shows a diagram illustrating the resonant time dynamics of an LRU for different interaction pulse shapes.

DETAILED DESCRIPTION

Concept of an embodiment using a superconducting qubit with a flux line

In the following, an embodiment of a leakage reduction unit for a superconducting qubit is described, which builds on a controlled coupling of a leakage state to a resonator mode while the computational space is kept intact. The coupling is realized using a parametric qubit frequency modulation. The parametric qubit frequency modulation is achieved by modulating the flux through the SQUID loop of the qubit using a flux line. The engineered coupling is a first-order transition, and therefore the LRU can be made fast with a lower relative drive power than LRUs that are based on a second-order coupling. There exists another transition from one of the computational states to the resonator mode, which is detuned by the anharmonicity of the qubit. For some qubits the anharmonicity is relatively small, leading to Purcell-induced decay of that computational state and increasing the susceptibility to cross-driving that transition. It is therefore proposed to use a narrow Purcell filter and pulse shaping techniques to strongly suppress energy relaxation in the computational subspace. Furthermore, to minimize flux noise-induced dephasing in the computational subspace, a low modulation amplitude is proposed, and qubits with an asymmetric SQUID are suggested. The resonator mode is coupled to a dissipative environment. For efficient use of on-chip resources, the qubit readout circuit is suggested to be used as the resonator mode and the dissipative environment. For this reason, the resonator mode will also be called a "readout mode" in the following.

Keeping the computational subspace intact, i.e. addressing only the leakage state, requires additional care but makes the LRU universal in the sense that it can be applied to both data and auxiliary qubits in a quantum error correction protocol. Furthermore, it makes the operation significantly faster compared to addressing both the leakage state and first excited state as is done in full reset protocols. While the speed of a reset protocol is not an important criterion when the use case is to reset the qubit populations at the start of an experiment, it is of utmost importance when the reset protocol is used in a quantum error correction cycle to reduce the accumulation and proliferation of leakage errors on auxiliary qubits. This is because data qubits idling during the reset operation naturally suffer from decoherence during that time. Therefore, even for auxiliary-qubit-only leakage mitigation in quantum error correction, a leakage reduction unit selectively addressing the leakage state is better suited than a full reset protocol.

The proposed protocol exploits a zero in the underdamped time evolution of the leakage population, leaving a finite final population in the readout circuit, which potentially causes errors on subsequent operations. Still, it is not necessary to wait until the excitation in the readout mode has decayed before continuing with the operations of the QEC cycle for two reasons: First, the excitation in the readout mode is only created if a leakage error has occurred, which typically has low probability. Second, in the case of such an event, it usually does not matter if an additional error in the computational subspace is introduced because the goal of a LRU is only to convert a leakage error into an error in the computational subspace.

Controlled coupling through parametric flux modulation

In the following, a circuit quantum electrodynamics setup is described, in which a qubit is dispersively coupled to a resonator structure having a resonator mode with an effective linewidth $\kappa$.

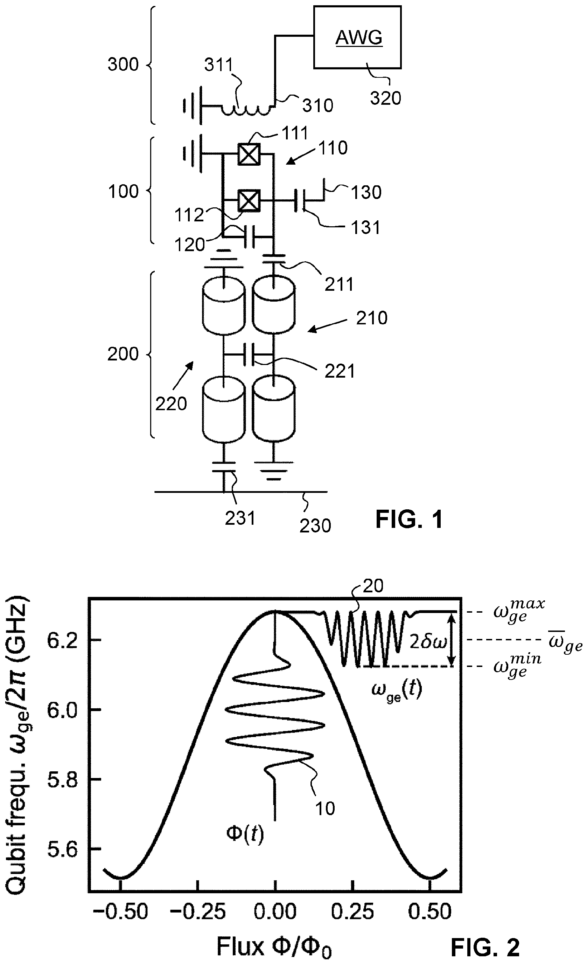

Fig. 1 illustrates an electrical circuit diagram of the setup. A superconducting qubit 100 is capacitively coupled to a resonator structure 200 via a capacitive coupler 211. The resonator structure 200 comprises an individual readout resonator 210 and an individual Purcell filter 220. In the present example, the readout resonator and Purcell filter are each realized as a $\lambda/4$ resonator. Instead, the readout resonator and the Purcell filter may be realized with lumped elements. The readout resonator 210 is capacitively coupled to the Purcell filter 220 via a capacitive coupler 221. The Purcell filter 220 is capacitively coupled to a feedline 230 via a capacitive coupler 231. The feedline is coupled to a detection line, which can be modeled as a semi-infinite transmission line and thus as a dissipative element.

The Purcell filter protects the qubit from spontaneous emission due to its coupling to the readout resonator. For details concerning the concept of Purcell filters, see M.D. Reed et al., Fast reset and suppressing spontaneous emission of a superconducting qubit, Appl. Phys. Lett. 96, 203110 (2010). For details concerning implementation see J. Heinsoo et al., Rapid High-fidelity Multiplexed Readout of Superconducting Qubits, Phys. Rev. Applied 10, 034040 (2018).

The superconducting qubit 100 is a transmon qubit. It comprises a SQUID loop 110 comprising two Josephson junctions 111, 112. A capacitor 120 is connected to the SQUID loop in parallel to the Josephson junctions. Also shown is a microwave line 130 for driving single-qubit gates, which is capacitively coupled to the qubit via a coupling capacitor 131.

In the present example, the SQUID loop is connected to ground. However, a floating design may also be employed, wherein the SQUID loop connects two floating islands.

The qubit is frequency-tunable via the magnetic flux applied to its SQUID loop. To this end, a frequency modulation device 300 is provided. The frequency modulation device comprises a flux line 310, which is inductively coupled to the qubit via an inductive coupler 311, and an arbitrary waveform generator (AWG) 320.

Fig. 2 illustrates modulation of the qubit frequency using the frequency modulation device. On the horizontal axis, the magnetic flux $\Phi$ in the SQUID loop, normalized to the magnetic flux quantum $\Phi_0$, is shown. The thick black curve shows the qubit frequency $\omega_{ge}$ as a function of the magnetic flux. The qubit idles at a so-called sweet spot frequency, where the qubit frequency has a maximum or minimum as a function of the magnetic flux applied to its SQUID loop. In the present example, the qubit frequency has a local maximum at a flux $\Phi/\Phi_0 = 0$. By applying a flux modulation pulse 10 that causes sinusoidal flux modulation $\Phi(t)$ around the sweet spot with a (time-independent or time-dependent) frequency $\omega_p$ and a time-dependent flux modulation amplitude $\delta\Phi(t)$, a frequency modulation pulse 20 is caused, during which the qubit frequency $\omega_{ge}$ is modulated with a modulation frequency $\omega_{mod} = 2\omega_p$. As a result of the modulation, the average qubit frequency during the frequency modulation pulse is reduced to a time-averaged qubit frequency $\overline{\omega_{ge}}$. The modulation amplitude of the qubit frequency is defined as $\delta\omega = \frac{1}{2}(\omega_{ge}^{max} - \omega_{ge}^{min})$, wherein $\omega_{ge}^{max}$ and $\omega_{ge}^{min}$ are the maximum and minimum, respectively, of the qubit frequency during the frequency modulation pulse. For small $\delta\omega$, the following relationship holds: $\overline{\omega_{ge}} \approx \omega_{ge}(\Phi = 0) - \delta\omega$.

In more general terms, the time-dependent magnetic flux in the SQUID loop of the qubit can be written as

$$\Phi(t) = \Phi_{bias} + \delta\Phi(t)\cos\big(\omega_p(t)\cdot t + \theta_p(t)\big), \qquad (1)$$

with $\Phi_{bias}$ a potential DC flux bias, $\delta\Phi(t)$ the flux modulation amplitude, $\omega_p(t)$ the flux modulation frequency, and $\theta_p(t)$ the flux modulation phase. The flux modulation amplitude, frequency and phase may each be slowly time-dependent on a time scale that is longer than the time scale given by $\omega_p$.

For clarity, in the remainder of this section, $\delta\Phi$, $\omega_p$ and $\theta_p$ will be assumed to be time-independent. However, providing a time-dependent envelope function $\delta\Phi$ and possibly a time-dependent phase $\theta_p$ may help to better suppress driving the g-e transition, as will be explained in more detail below. For a full treatment including time-dependent envelope functions, reference is made to Appendix A.

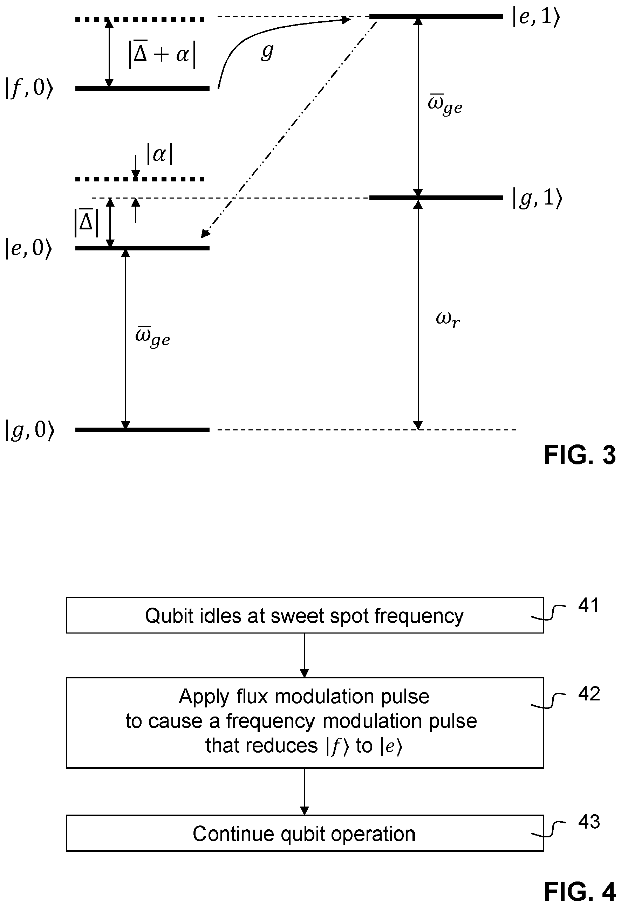

The effects of the modulation of the qubit frequency on the energy levels of the coupled qubit-resonator system are illustrated in the energy level diagram in Fig. 3, which shows the time-averaged energy levels (or, equivalently, frequency levels) of selected tensor product states of the qubit and the resonator mode during application of the frequency modulation pulse. Here, $|g\rangle$, $|e\rangle$ and $|f\rangle$ designate the ground, first and second excited qubit states. The states $|g\rangle$ and $|e\rangle$ are the computational states. The state $|f\rangle$ is the lowest leakage state. The second number in the ket designates the Fock state of the resonator mode, which number can be understood as indicating the number of elementary excitations ("photons") in the resonator mode. For the three energy levels $|g, 0\rangle$, $|e, 0\rangle$ and $|f, 0\rangle$ on the left-hand side of the diagram, the resonator mode is in its ground state ("zero photons"). For the two energy levels on the right-hand side of the diagram, the resonator mode is in its first excited state ("one photon").

By modulating the frequency of the qubit using the flux line, sidebands are created. Two of these sidebands are shown in thick dotted lines on the left-hand side of the diagram. For clarity, only the upper sidebands of the excited state $|e, 0\rangle$ and the leakage state $|f, 0\rangle$ are shown. The modulation creates a parametric coupling between these states and corresponding energy levels on the right. For the states $|f, 0\rangle$ and $|e, 1\rangle$, the interaction is resonant (sideband of $|f, 0\rangle$ aligned with the energy level of $|e, 1\rangle$). The coupling between these states is indicated with an arrow. The corresponding coupling strength is indicated as $g$. In addition, there is an off-resonant interaction between the states $|e, 0\rangle$ and $|g, 1\rangle$ (sideband of the excited state $|e, 0\rangle$ detuned by the anharmonicity $\alpha$ from the energy level of $|g, 1\rangle$). The interaction between $|e, 0\rangle$ and $|g, 1\rangle$ is not specifically indicated in the diagram. The resonator mode can decay into the feedline, removing one excitation from the resonator mode. This is indicated with a dash-dotted line. States that differ by one excitation in the resonator mode are spaced by the resonator frequency $\omega_r$.

The flux modulation frequency $\omega_p$ is chosen such that the qubit frequency is parametrically modulated at a frequency corresponding to the detuning of the states $|f, 0\rangle$ and $|e, 1\rangle$ under the parametric frequency modulation. Hence, the leakage state $|f\rangle$ is coupled to a computational state and an excitation in the readout mode which decays on a time scale given by $1/\kappa$.

To induce a resonant interaction between $|f, 0\rangle$ and $|e, 1\rangle$ with the qubit idling at one of its sweet spot frequencies, the flux modulation frequency $\omega_p$ needs to be half the frequency difference between the average e-f transition frequency under flux modulation, $\overline{\omega}_{ef}$, and the resonator frequency $\omega_r$, i.e.:

$$2\omega_p = \omega_{mod} = |\overline{\omega}_{ef} - \omega_r| \approx |\overline{\omega}_{ge} + \alpha - \omega_r| = |\overline{\Delta} + \alpha| \qquad (2)$$

Here, it was assumed that the anharmonicity $\alpha = \omega_{ef} - \omega_{ge}$ varies little with the qubit frequency $\omega_{ge}$ (which is generally true in case of a transmon qubit). The symbol $\overline{\Delta}$ indicates the time-averaged detuning $\overline{\Delta} = \overline{\omega}_{ge} - \omega_r$ between the qubit and the readout mode. The coupling strength can be controlled by the frequency modulation amplitude $\delta\omega$, defined as half the difference between the maximum and minimum qubit frequency during flux modulation. For small modulation amplitudes, the time-dependent qubit frequency reads

$$\omega_{ge}(t) \approx \overline{\omega}_{ge} \mp \delta\omega \cos\big(2\omega_p t + 2\theta_p\big), \qquad (3)$$

with $\overline{\omega}_{ge}$ the average qubit frequency during flux modulation and the + sign referring to the qubit idling at its maximum and minimum frequency, respectively. The resulting coupling strength is

$$g = \sqrt{2}\, g_{qr}\, J_1(\delta\omega/2\omega_p) \qquad (4)$$

with $g_{qr}$ the mean coupling strength between the qubit and the readout resonator during flux modulation and $J_1$ the first Bessel function of the first kind.

As will be explained in more detail below, higher harmonics are in general also created by the flux modulation, manifesting themselves as additional sidebands. One can either make an effort to suppress the additional sidebands to avoid driving unwanted, other transitions, or use them intentionally to operate LRUs on qubits for which the bandwidth of the AWG is not large enough to establish a coupling between the qubit and the (far detuned) resonator mode.

A low modulation depth $\delta\omega \ll \omega_{ge}$ is used to keep residual-ZZ interactions between neighboring qubits low during the LRU operation and to minimize dephasing in general. Furthermore, due to the shift of the qubit frequency during flux modulation to a mean value $\overline{\omega}_{ge} \sim \omega_{ge}^{max} - \delta\omega$ if the qubit idles at its maximum frequency, or to a mean value $\overline{\omega}_{ge} \sim \omega_{ge}^{min} + \delta\omega$ if the qubit idles at its minimum frequency, a virtual-Z gate should be applied to the qubit to compensate for the corresponding deterministic phase error.

The modulation frequency is given by $\omega_{mod} = 2\omega_p = |\overline{\Delta} + \alpha| \approx |\Delta \mp \delta\omega + \alpha|$. Since a typical qubit-readout resonator detuning is $|\Delta/2\pi| \sim 1$ GHz, the relation $\delta\omega/2\omega_p \ll 1$ holds, and the approximation $J_1(\delta\omega/2\omega_p) \approx (\delta\omega/4\omega_p)$ can be made. Within this approximation, the coupling strength is given by

$$g = \frac{1}{\sqrt{2}} g_{qr} \frac{\delta\omega}{|\Delta \mp \delta\omega + \alpha|}. \tag{5}$$

For realistic parameters, $\Delta/2\pi = -1$ GHz, $\alpha/2\pi = -170$ MHz, $\delta\omega/2\pi = 100$ MHz, $g_{qr} = \Delta/6$, and assuming the qubit to idle at its maximum frequency, we obtain $g/2\pi = 9.3$ MHz. In case $\omega_r$ is smaller than $\omega_q$ (e.g., $\Delta/2\pi = +1$ GHz), the relationship $g_{qr}/(\Delta + \alpha) \sim 1/6$ would need to be satisfied to operate in the same regime of dispersive approximation for the *e-f* transition, obtaining $g/2\pi = 10.5$ MHz.

In the above discussion, it was assumed that the flux modulation amplitude $\delta\Phi$ is time-independent, leading to a time-independent frequency modulation amplitude $\delta\omega$ and to a time-independent coupling strength $g$. In general, however, the flux modulation amplitude $\delta\Phi$ will be time-dependent, defining the envelope of the flux pulse 10. Accordingly, also the frequency modulation amplitude $\delta\omega$ and the coupling strength $g$ will be time-dependent. The time-dependent parametric coupling of the states $|f, 0\rangle$ and $|e, 1\rangle$ with time-dependent coupling strength g(t) will in the following be referred to as the "interaction pulse". The envelope and phase of the interaction pulse can be controlled by shaping the envelope of the flux modulation pulse and controlling its phase, respectively, see Appendix A for details.

The advantage of the parametric coupling is that it is a first-order transition so that even with a small $\delta\omega$ coupling strengths of $g/2\pi \sim 10$ MHz can be easily achieved. Hence, unwanted dissipation in the cryogenic setup used to operate the apparatus is not a concern, first because the required flux amplitudes are typically smaller than those required for two-qubit gates and second because dissipation in the flux lines can anyway be brought to close to zero with superconducting cables. Furthermore, the tune-up of the LRU operation is straightforward and no additional hardware is required because the analog bandwidth of state-of-the-art arbitrary waveform generators used to generate flux pulses is about 750 MHz.

A disadvantage of the scheme is that the phase coherence of the qubit is reduced during the LRU operation because the qubit is tuned away from its sweet spot frequency. This is not a concern for auxiliary qubits though, because they are not in a superposition state and thus not sensitive to dephasing when the LRU is executed. To minimize dephasing of data qubits, a low modulation depth is chosen, and an asymmetric SQUID loop is used, where the frequency vs. flux transfer function is shallower. Furthermore, due to the flux being modulated symmetrically around a maximum or minimum of the qubit frequency, some insensitivity against low frequency flux noise is expected, similar to the built-in echo effect of net-zero dynamic flux two-qubit gates.

### Flow diagram

Fig.4 shows a flow diagram that summarizes the above-described method of leakage reduction in a qubit. In step 41, the qubit idles at a sweet spot frequency. In step 42, a flux modulation pulse is applied. The flux modulation pulse causes a frequency modulation pulse, which in turn causes an interaction pulse. The interaction pulse selectively causes population transfer from $|f, 0\rangle$ to $|e, 1\rangle$. Thereby, the leakage state $|f\rangle$ is selectively reduced to the first excited qubit state $|e\rangle$. Once the desired population transfer from the leakage state $|f\rangle$ to the first excited qubit state $|e\rangle$ has been achieved, qubit operation continues in step 43.

### Exemplary physical implementation of a transmon qubit

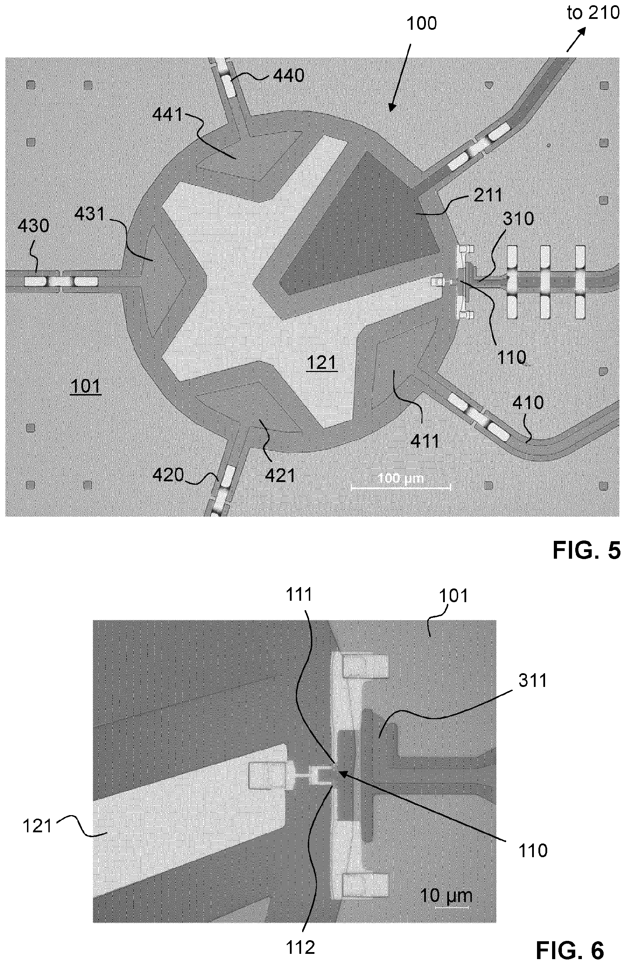

Figs. 5 and 6 show micrographs that illustrate an actual physical implementation of a transmon qubit. The qubit comprises a roughly star-shaped superconducting qubit island 121, forming a capacitor to ground 101 (capacitor 120 in Fig. 1). Two Josephson junctions 111, 112 are arranged in parallel between the qubit island 121 and ground 101, forming a SQUID loop 110, as illustrated on an enlarged scale in Fig. 6. A flux line 310 is coupled to the SQUID loop via an inductive coupler 311 for modulating the flux through the SQUID loop. A readout resonator 210 (not visible in Figs. 5 and 6) is coupled to the qubit island 121 via a capacitive coupler 211. Coupling lines 410, 420, 430, 440 leading to neighboring qubits are coupled to the qubit island via capacitive couplers 411, 421, 431, 441, respectively.

Time dynamics

The resonant time dynamics of the LRU can be conveniently described with a non-Hermitian Hamiltonian

$$H_{1m} = \begin{pmatrix} 0 & g \\ g & -i\,\kappa/2 \end{pmatrix}, \tag{6}$$

in a frame rotating at the instantaneous qubit frequency and the frequency of the readout mode ("Interaction picture of quantum mechanics"). Here, $g$ is the engineered coupling strength between the states $|f, 0\rangle$ and $|e, 1\rangle$, which in this section, for clarity, we treat as time-independent and real-valued, and the term $-i\,\kappa/2$ models the dissipation of the state $|e, 1\rangle$ to the state $|e, 0\rangle$, i.e. the decay of the readout mode. To obtain a better basic understanding of the time dynamics, the resonator structure consisting of readout resonator and Purcell filter is modelled as a single resonator mode with an effective linewidth $\kappa$ close to resonance. This is possible if the coupling $\kappa_P$ of the Purcell filter to the detection line is much larger than the coupling $J$ between the readout resonator and the Purcell filter, or if $J \gtrsim \kappa_P$, in which case two frequency-split, approximately independent readout modes result. For a general two-mode treatment see Appendix C. Dissipation of the transmon states is not included in the model as it occurs on a time scale much longer than $1/\kappa$.

For $\kappa > 4g$ the eigenvalues of $H_{1m}$ are purely imaginary, and the time dynamics is overdamped. For $\kappa = 4g$ the system is critically damped, and for $\kappa < 4g$ the system undergoes underdamped oscillations. In the critically and underdamped regime the imaginary parts of both eigenvalues are $-\kappa/4$, determining the envelope of the decrease of the populations as a function of time. The LRU is advantageously operated well in the underdamped regime, where the time needed to bring the population of the $|f, 0\rangle$ state to zero is $\gtrsim \pi/2g$. This has the advantage of being significantly faster than full reset protocols, which either need to wait between subsequent operations for the resonator population to fully decay or take a few times the inverse reset rate, which is $2/\kappa$ when resetting only the $|e\rangle$ state or $3/\kappa$ when resetting both the $|e\rangle$ and $|f\rangle$ state.

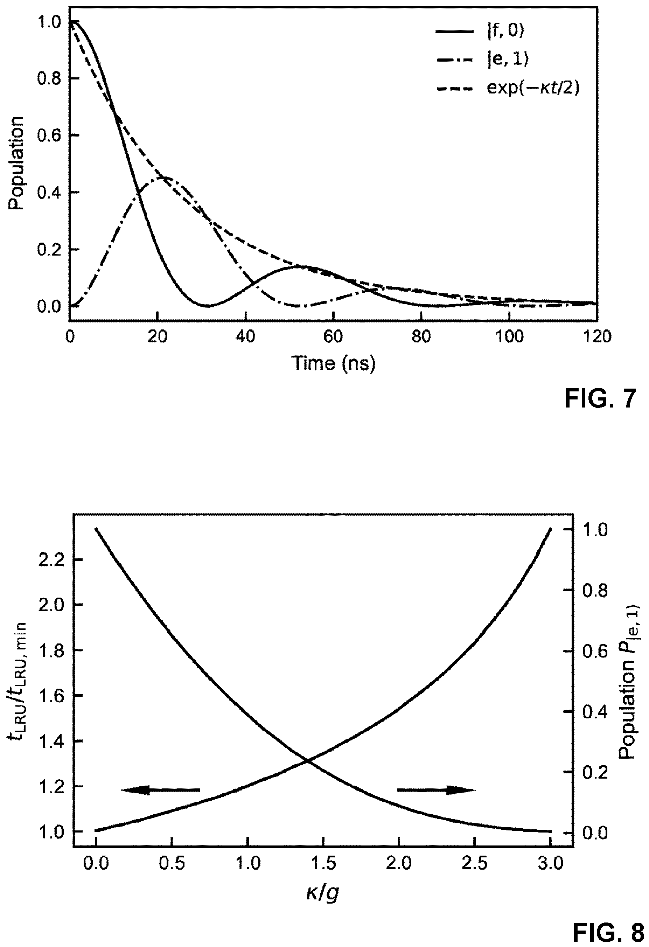

Operation of the LRU is illustrated in Fig. 7 in the underdamped regime. The figure illustrates the time evolution of the populations of the states $|f, 0\rangle$ and $|e, 1\rangle$ under the Hamiltonian $H_{1m}$ (Eq. (6)) for $g/2\pi$ = 10 MHz and $\kappa/2\pi$ = 12 MHz. The dashed line is the exponentiallydecaying envelope of the oscillations. For simplicity it was assumed that the coupling is switched on and off instantaneously. In practice, some softening of the edges of the envelope of the flux pulse occurs and may even be desired to suppress unwanted couplings within the computational subspace, see below. The initial state is $|\psi(t = 0)\rangle = |f, 0\rangle$ and the time-evolved state is given by $|\psi(t)\rangle = e^{-Ht}|f, 0\rangle$. The populations $P_{|f,0\rangle}(t) = |\langle f, 0|\psi(t)\rangle|^2$ and $P_{|e,1\rangle}(t) = |\langle e, 1|\psi(t)\rangle|^2$ show damped Rabi oscillations, with their envelope decaying $\propto exp(-\kappa t/2)$. The duration $t_{LRU}$ of the leakage reduction operation is defined as the time at which $P_{|f,0\rangle}$ reaches the first zero ($t_{LRU} \sim$ 31 ns in the present example).

Next, the dependence of $t_{LRU}$ on $\kappa$ is studied, assuming a fixed coupling strength $g/2\pi \sim$ 10 MHz. Well in the underdamped regime, $\kappa \sim g$, $P|_{f,0\rangle}$ reaches zero fastest, on a time scale $\sim \pi/2g$. However, since the readout mode is used as the dissipative environment, $\kappa$ may instead be chosen to optimize readout performance. For fast, high-fidelity readout, $\kappa$ may be assumed to be about three times the dispersive shift $\chi = g_{qr}^2\,\alpha/[\Delta(\Delta + \alpha)]$, i.e. larger than the optimal steady-state value $\kappa = 2\chi$, which is beneficial in the transient regime where the resonator field rings up, enabling faster readout. Moreover, a large $\kappa$ reduces the depletion time of the readout mode after readout. For the parameters from above, i.e. $g_{qr}/\Delta$ = 1/6, $\alpha/2\pi$ = -170 MHz, $\Delta/2\pi$ = -1 GHz, we have $\chi/2\pi$ = 4.0 MHz. Hence, it is reasonable to target $\kappa/2\pi \sim$ 12 MHz.

A numerical simulation of the time dynamics of the LRU was carried out for different ratios $\kappa/g$; the initial state being $|f, 0\rangle$. The value of $t_{LRU}$ was extracted and compared to $t_{LRU,min} = \pi/2g$, which is the minimum duration of the LRU reached in the regime of very weak dissipation $\kappa \ll g$ and amounts to 25 ns for $g/2\pi$ = 10 MHz. Fig. 8 illustrates the resulting duration of the LRU normalized to its minimum value (left vertical axis) and the readout resonator population after the LRU operation (right vertical axis) as a function of the ratio x/g (horizontal axis), the arrows indicating which curve belongs to which vertical axis. As can be seen in Fig 8, for $\kappa \sim g$, $t_{LRU}$ is only 20% larger than $t_{LRU,min}$. For the parameters from above, $\kappa/g \approx$ 1.2, $t_{LRU}$ is increased by 25% compared to $t_{LRU,min}$.

The numerically calculated data were compared to the analytical result

$$t_{LRU} = \frac{\pi + 2\theta}{2\sqrt{g^2 - (\kappa/4)^2}}, \tag{7}$$

obtaining perfect agreement. Here, the phase shift

$$\theta = \arctan\left[\frac{\kappa/4g}{\sqrt{1-(\kappa/4g)^2}}\right] \tag{8}$$

is a result of the eigenstates of $H_{1m}$ having an imaginary part, see Appendix B for details. This means that the rotation angle required to bring $P_{|f,0\rangle}$ to zero is larger than $\pi$. For the shown range of $\kappa/g$, $2\theta$ increases approximately linearly from zero to $\pi/2$.

Also the population left in $P_{|e,1\rangle}$ for $t = t_{LRU}$ was computed as a function of $\kappa/g$ (right vertical axis). An exponential decay was found, given by

$$P_{|g/e,1\rangle}(t = t_{LRU}) = \exp(-\kappa t_{LRU}/2). \tag{9}$$

Like $t_{LRU}/t_{LRU,min}$, $P_{|e,1\rangle}(t = t_{LRU})$ is a function of $\kappa/g$ only, see Appendix B for a derivation of Eq. (9). At the intended operation parameters $\kappa/g \sim 1.2$, $P_{|e,1\rangle}$ equals 0.31. $P_{|e,1\rangle}$ is desired to be low so that the operations following the LRU operation are least affected by the presence of a photon in the readout mode. The remaining population in the readout resonator decays with a time constant $1/\kappa \approx 13$ ns.

Protection of the computational subspace

The engineered resonant coupling between the states $|f, 0\rangle$ and $|e, 1\rangle$ entails an off-resonant coupling between the states $|e, 0\rangle$ and $|g, 1\rangle$, which involves the computational state $|e, 0\rangle$. In the frame defined above, and assuming, without loss of generality, $\overline{\Delta} < 0$ and thus using the upper sideband, the corresponding transition is detuned by the qubit

anharmonicity $\alpha$ (see Fig. 3), which is significantly larger than the coupling strength $g/\sqrt{2}$ between these states. Hence, little direct population exchange is expected and the interaction can be considered dispersive. However, dispersive coupling between the states $|e, 0\rangle$ and $|g, 1\rangle$ in combination with the dissipative nature of the state $|g, 1\rangle$ leads to Purcell-induced decay of the qubit excited state to the ground state. To suppress this decay to close to zero, a Purcell filter is coupled to the readout resonator. Analogous to suppressing Purcell decay of the qubit in the absence of any drive, it suppresses the LRU drive-induced decay of the qubit. To be effective the Purcell filter linewidth should preferably be significantly smaller than the detuning $\alpha$ of the unwanted transition. This can be achieved by using individual Purcell filters because a single common Purcell filter for multiple readout resonators requires a much larger bandwidth.

In addition to the off-resonant interaction, the LRU drive can also induce a finite resonant coupling of the states $|e, 0\rangle$ and $|g, 1\rangle$ if the spectrum of the pulsed, parametric interaction has finite weight at frequencies $\alpha$. This can be mitigated through appropriate pulse shaping as will be shown below.

The time dynamics in the computational subspace was simulated using an interaction Hamiltonian analogous to the one describing the time evolution of the target interaction (Eq. (6)), but explicitly including the readout resonator and Purcell filter modes. In the basis $|e, 0\rangle$, $|g, 1\rangle$, $|g, 1P\rangle$, with $|g, 1\rangle$ and $|g, 1P\rangle$ denoting the single-photon Fock states in the readout resonator and Purcell filter, respectively, this Hamiltonian reads

$$H = \begin{pmatrix} 0 & g^*(t)/\sqrt{2}e^{-i\delta t} & 0 \\ g(t)/\sqrt{2}e^{i\delta t} & 0 & J \\ 0 & J & -i\,\kappa_P/2 \end{pmatrix}. \tag{10}$$

Here, $\delta = -2\omega_p - \overline{\Delta} \approx \overline{\omega_{ge}} + \alpha - \omega_r - \overline{\Delta} = \alpha$ is the detuning between the parametric drive and the frequency difference between the states $|e, 0\rangle$ and $|g, 1\rangle$, and a time-dependent coupling strength $g(t)$ is taken into account. Values of $J/2\pi$ = 11.0 MHz and $\kappa_P/2\pi$ = 40 MHz for the readout resonator-Purcell filter coupling strength and the Purcell filter linewidth, respectively, were assumed, so that the effective linewidth of the readout resonator is approximately $\kappa \approx 4J^2/\kappa_P$ = 12 MHz, see also the discussion in Appendix C.

First, the time evolution of the computational subspace was simulated with an interaction pulse in which the coupling $g(t)$ is switched on almost instantaneously for a duration of 100 ns, with $|e, 0\rangle$ being the initial state. The interaction pulse was realized by convolving a rectangular pulse of duration of 100 ns with a Gaussian of width $\sigma = 1$

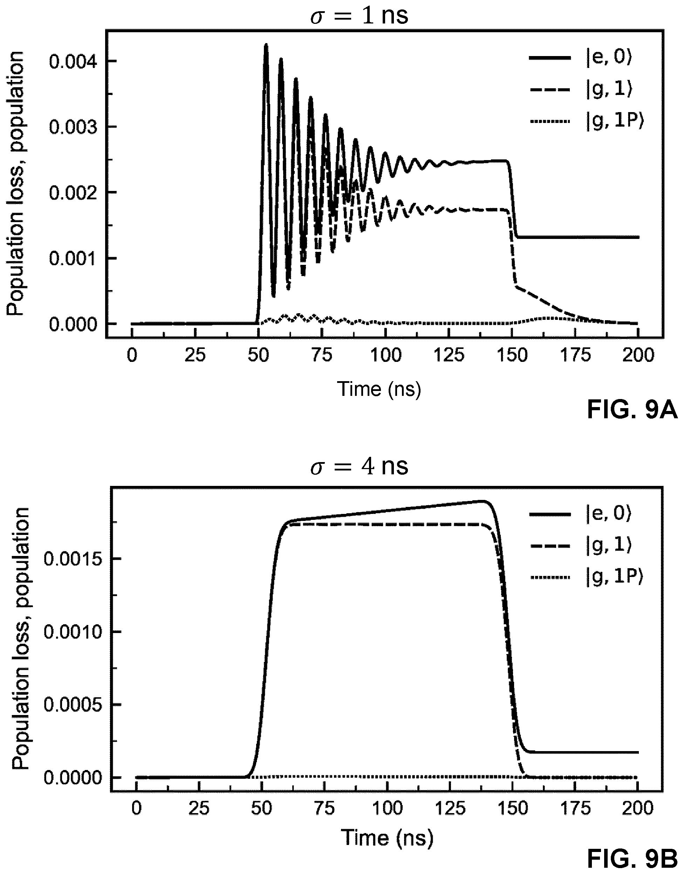

ns. As expected for a drive off-resonant by $\alpha/2\pi$ = -170 MHz, oscillations with a period $2\pi/\alpha \approx 6$ ns were observed for all three states $|e, 0\rangle$, $|g, 1\rangle$, and $|g, 1P\rangle$. This is illustrated in Fig. 9A. For better visibility the population loss 1-$P_{|e,0\rangle}$ of the qubit and the populations $P_{|g,1\rangle}$ and $P_{|g,1P\rangle}$ in the readout resonator and Purcell filter, respectively, are plotted. The two contributions to population loss described above are well visible in the time dynamics: First, the off-resonant drive in combination with the instantaneous switch-on of the interaction leads to smallamplitude Rabi oscillations between $|e, 0\rangle$ and $|g, 1\rangle$, which are damped due to the coupling of $|g, 1\rangle$ to the dissipative state $|g, 1P\rangle$. Second, due to the instantaneous switch-on of the interaction, there is a finite resonant drive component transferring population from $|e, 0\rangle$ to $|g, 1\rangle$, and subsequently between $|g, 1\rangle$ and $|g, 1P\rangle$. In total, the population loss amounts to about $1.3 \times 10^{-3}$ after the interaction.

Conversely, if the interaction is turned on adiabatically using a Gaussian filter kernel with a width of $\sigma$ = 4 ns, no population oscillations are induced. This is illustrated in Fig. 9B. Importantly, with the resonant drive component suppressed to close to zero, the final population loss is also much reduced. The off-resonant drive still hybridizes the states $|e, 0\rangle$ and $|g, 1\rangle$, which is visible as the finite $P_{|g,1\rangle}$ population during the interaction pulse. Due to the resonant coupling between $|g, 1\rangle$ and $|g, 1P\rangle$, this leads to an effective dissipation of $|e, 0\rangle$, which increases linearly with time for low dissipation rates and amounts to about $1.7 \times 10^{-4}$ after 100 ns of interaction, one order of magnitude lower than without pulse shaping. This population loss may be called Purcell-induced because it results from an off-resonant, dispersive coupling to a dissipative mode.

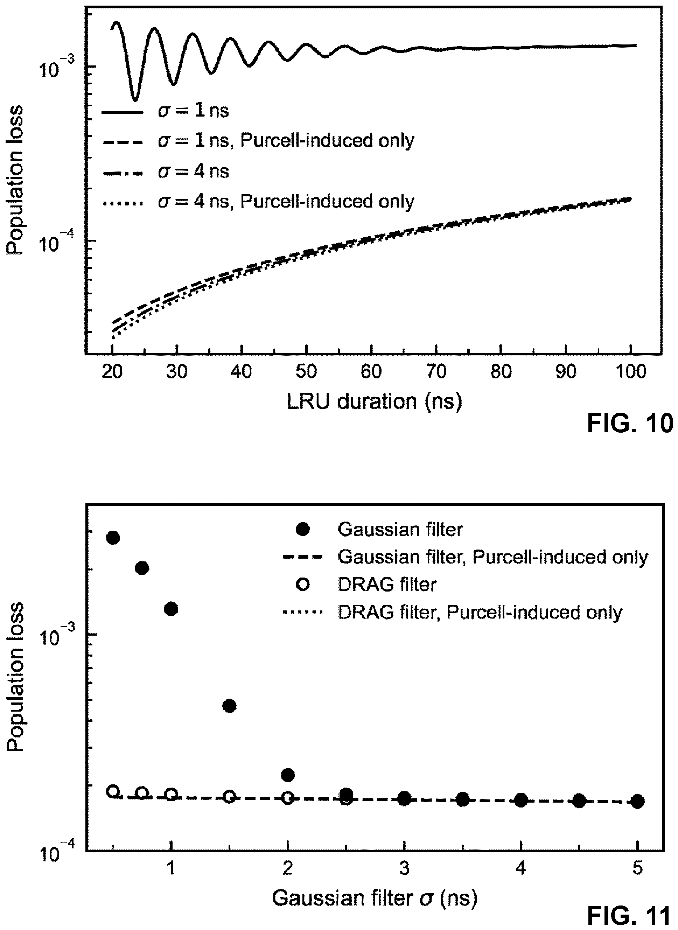

Next, the population loss of the state $|e, 0\rangle$ was computed as a function of the LRU duration. For $\sigma$ = 1 ns, oscillations were observed for durations between 20 and 70 ns because the populations oscillate during this time window. This is illustrated in Fig. 10. The increase in population loss as a function of LRU duration is small compared to the population loss already present at short durations because the population loss is mainly due to the bandwidth of the interaction pulse being comparable to $\alpha$. For $\sigma$ = 4 ns this contribution is negligible and only the Purcell-induced population loss is present, which increases linearly as a function of time for low dissipation rates. For the nominal duration of the LRU operation, $t_{LRU} \sim 31$ ns the population loss is as low as $5 \times 10^{-5}$. The simulated population loss is very close to the Purcell-limited population loss $\gamma_P t_{LRU}$, with the Purcell decay rate

$$\gamma_P = \left(\frac{g}{\delta}\right)^2 \kappa \, \frac{1}{1+(2\delta/\kappa_P)^2}. \qquad (11)$$

To take into account the finite rise and fall time of the interaction pulse and thus the time dependence of $g(t)$, the Purcell rate was integrated over the duration of the LRU to obtain the Purcell-limited population loss $P_p = \int dt \gamma_P(t)$, which is shown in Fig. 10 as dashed lines for $\sigma$ = 1 ns and for $\sigma$ = 4 ns. Importantly, for the above parameter choice, the Purcell limited lifetime of the qubit due to and during the LRU operation, $1/\gamma_P = 281$ $\mu$s, is larger than state-of-the-art energy relaxation times, meaning that the proposed LRU operation can achieve coherence-limited performance. Given that the operation is similarly fast as a single-qubit gate operation, it is expected that the LRU operation has an error rate comparable to the one of a single-qubit gate.

To find out the minimum $\sigma$ for which the LRU becomes Purcell-limited, the population loss was computed as a function of $\sigma$ for a fixed LRU duration of 100 ns. The results are illustrated in Fig. 11, which shows the population loss induced by a 100 ns-long LRU operation as a function of the width $\sigma$ of a Gaussian (filled circles) or DRAG (open circles) filter kernel applied to a rectangular interaction pulse. For a Gaussian filter kernel and the above parameters, the population loss becomes Purcell-limited for $\sigma \geq 2.5$ ns, which is visible as a leveling off of the population loss for larger $\sigma$.

With a nominal LRU duration of about 31 ns only, the finite rise and fall times of the interaction pulse add significant length to the total duration of the LRU. To make the total LRU duration as short as possible, a quadrature component may be added to the real-valued Gaussian filter kernel, which is proportional to the derivative of the Gaussian. Similar to so-called DRAG pulses for single-qubit gates to suppress phase and leakage errors, this allows to engineer a zero at $\delta \approx \alpha$ in the frequency spectrum of the interaction pulse, suppressing any resonant interaction between $|e, 0\rangle$ and $|g, 1\rangle$. This filter kernel may thus be called a DRAG filter. It is given by

$$f(t) = \frac{1}{\sqrt{2\pi\sigma^2}} \left(1 - B\frac{t}{\sigma^2}\right) exp\left(-\frac{t^2}{2\sigma^2}\right). \qquad (12)$$

Setting $B = i/\alpha$ realizes a zero at $\alpha$ in the frequency spectrum of $f(t)$ and thus in $g(t)$. Realizing the imaginary (quadrature) component of $g(t)$ corresponds to adjusting the phase of the corresponding flux pulse component accordingly, see also Appendix A. The time dynamics of a DRAG filtered, 100 ns-long interaction pulse was simulated as a function of $\sigma$, and the population loss was extracted, see open circles in Fig. 11. In contrast to a simple Gaussian filter kernel, Purcell-limited performance was essentially reached for all values of simulated $\sigma$, i.e. down to $\sigma$ = 0.5 ns, see the dashed line in Fig. 11. Since the unwanted transition is relatively broad compared to a qubit transition, as it is set by

$\kappa$, the described suppression using the DRAG filter from Eq. (12) might not lead to Purcell-limited performance for some parameter regimes. In that case, adding a term proportional to the second derivative of the Gaussian can be used to realize a quadratic zero $\propto (\omega - \alpha)^2$ in the frequency spectrum of the interaction pulse, yielding a broader suppression of the unwanted transition.

Experimental verification

Experiments were performed to verify the predicted behavior of the proposed LRU on an actual qubit. A transmon qubit similar to the one illustrated in Figs. 5 and 6 was used.

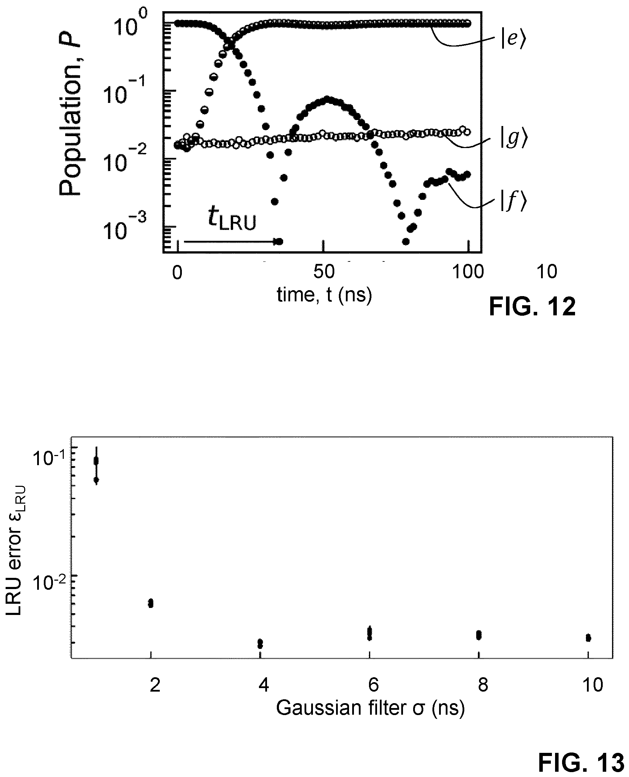

Fig. 12 shows the measured time evolution of the populations of states $|g\rangle$, $|e\rangle$ and $|f\rangle$ of the transmon qubit initially prepared in state $|f\rangle$ under application of a flux modulation pulse with $\omega_p/2\pi$ = 570 MHz and $\delta\omega/2\pi$ = 110 MHz. The $|f\rangle$ population exhibits a damped oscillation with a first minimum at $t \approx 31$ ns, similar to the predicted behavior (cf. Fig. 7; note that the population is shown on a linear scale in Fig. 7, while it is shown on a logarithmic scale in Fig. 12). The $|f\rangle$ population is effectively transferred into an $|e\rangle$ population, without any appreciable population transfer from the $|f\rangle$ or $|e\rangle$ states to the $|g\rangle$ state.

Fig. 13 shows the measured error of a LRU operation in the computational subspace, determined with an interleaved randomized benchmarking protocol, as a function of the width $\sigma$ of the Gaussian filter kernel applied to a rectangular flux pulse. A qualitative similar behavior to the behavior predicted for the population loss as a function of the width $\sigma$ of the Gaussian filter kernel applied to a rectangular interaction pulse in Fig. 11 was observed.

Integration in a quantum error correction protocol

In the above discussion it was assumed that the readout mode is in its ground state upon the start of the operation. Otherwise, the LRU can perform the inverse operation, which is converting an excitation in the readout mode and a computational state into the leakage state, i.e. $|e, 1\rangle$ into $|f, 0\rangle$. Assuming a low initial leakage population, the thermal population of the readout mode $n_{r,th}$ sets a lower bound of $\sim 0.5 n_{r,th}$ for the achievable leakage level after the LRU operation, even if the coupling part of the LRU is implemented perfectly. The factor of $\sim 0.5$ comes from assuming that the initial state is $|g\rangle$ or $|e\rangle$ with equal probability. This factor can be reduced for auxiliary qubits in QEC protocols by using some degree of real-time decoding and feedback on auxiliary qubits with the goal of maximizing the probability that the auxiliary qubits are in the ground state during the LRU and readout operations. Low $n_{r,th}$ can be achieved with sufficient attenuation in the readout input lines and sufficient isolation in the readout output line. Such a limitation exists for all reset or LRU protocols making use of a dissipative environment to remove qubit excitations. Measurement-based reset or measurement-based LRUs, which apply a single-qubit pulse conditioned on the measurement outcome, are not limited by $n_{r,th}$, but by the readout infidelity and qubit decoherence during the finite latency time between measurement and playback of the pulse, which is typically larger than $n_{r,th}$.

Unlike standard reset protocols, the proposed LRU operation leaves a finite population in the $|e, 1\rangle$ state in case leakage was present before the operation. This population then decays with a time constant $1/\kappa$. As discussed above, the LRU is normally embedded into a QEC cycle. In some embodiments, the QEC cycle is directly continued after the LRU operation, without waiting for a potential readout mode excitation to decay, to keep the decoherence per error correction cycle low. This can in principle entail subsequent errors as the potential excitation in the readout mode induces a dispersive shift $\chi$ on the qubit. However, the leakage probability per cycle, which is typically dominated by the leakage probability during two-qubit gates of about < 0.1%, sets an upper bound for the probability of such errors. In addition, if such subsequent errors are restricted to the computational subspace and to the same qubit they can be considered as pertaining to the LRU operation, which converts a leakage state into an arbitrary state in the computational subspace. This assumes that only the next operation after the LRU operation is affected by the finite probability of having an excitation in the readout mode. If more operations are affected or if the next operation is a two-qubit gate, multiple errors can arise. In that case one has to balance the probability and correctability of those errors against the increase in error rate which an increased cycle duration entails.

In QEC protocols, auxiliary qubits cyclically interact with data qubits to measure the parity of subsets of data qubits. At the end of each QEC cycle, following a coherent gate part, the auxiliary qubits are read out.

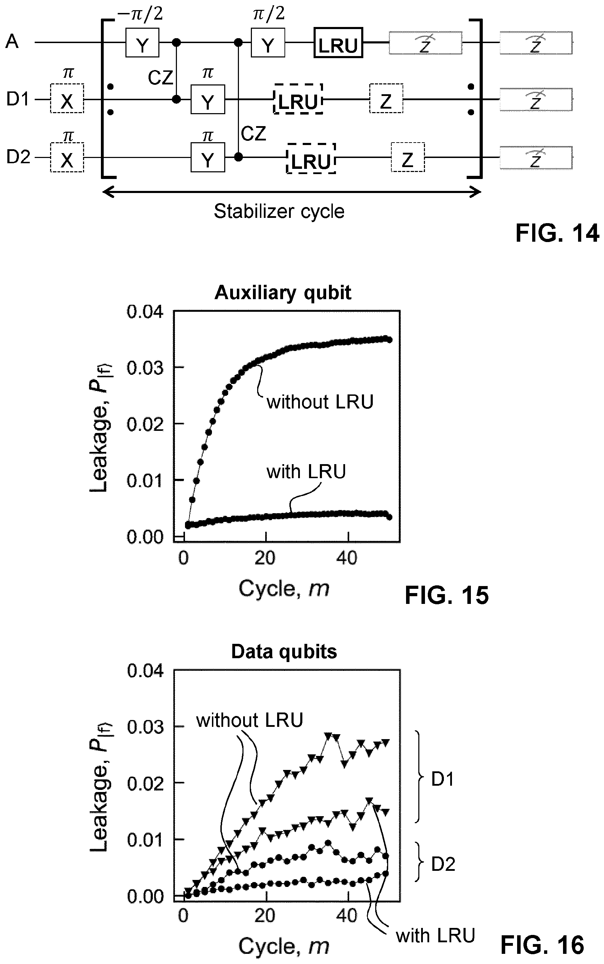

The integration of the LRU into a QEC protocol is illustrated by the way of example in Fig. 14, which shows a quantum circuit diagram of a weight-2 Z-type stabilizer measurement, as typically employed in a surface code. For details of a realization of a surface code, see S. Krinner et al., Realizing repeated quantum error correction in a distance-three surface code, Nature 605, 669 (2022). The stabilizer measurement of Fig. 14 is carried out on three qubits: two data qubits D1, D2 and one auxiliary qubit A. A plurality of stabilizer cycles is carried out repetitively. At the beginning of each stabilizer cycle, the auxiliary qubit is prepared into a superposition state by applying a $Y(-\pi/2)$ pulse to it. A first controlled-Z (CZ) gate is performed between the auxiliary qubit A and the first data qubit D1, followed by a second CZ gate performed between the auxiliary qubit A and the second data qubit D2. The auxiliary qubit A is then brought back into an eigenstate of the Pauli Z operator by applying a Y($+\pi/2$) pulse to it. Subsequently, the state of the auxiliary qubit is read out. Refocusing Y($\pi$) pulses are applied to the data qubits D1, D2 between application of the two CZ gates. For characterization purposes of the stabilizer measurement, a combination of initial X($\pi$) pulses may be applied to the data qubits to prepare all four eigenstates of the stabilizer operator $Z_{D1}Z_{D1}$, which is measured by the circuit. For compensating deterministic phase errors that are caused by the LRU, a Z-gate may be applied to each qubit. This is schematically illustrated for the data qubits D1, D2 by dashed boxes. These Z-gates may be implemented as so-called virtual Z-gates that are integrated into operations on the qubits that occur before or after the LRU.

For illustration purposes, in Fig. 14 a leakage reduction operation (LRU symbol) is carried out on all three qubits. However, the LRU may also be applied only to one or two of the qubits A, D1, D2. In particular, it may be applied only to the auxiliary qubit A.

In example of Fig. 14, the LRU is applied to the auxiliary qubit A immediately before its readout in each QEC cycle. Due to the two limitations of the LRU described above, this is a favorable location for the LRU operation on auxiliary qubits. The reason is that during the readout operation, the readout mode is populated with many photons, typically reaching a few tens of photons in steady state. Hence, a single photon already present due to a preceding LRU operation does not matter. Furthermore, if the LRU operation was to follow the readout operation, as is the case for full reset protocols, any leftover photons from the readout operation would be directly converted into leakage errors. Other operations, like single-qubit gates, are less sensitive to residual photons in the readout modes and therefore better suited as operations following readout. The suggested placement of the LRU on auxiliary qubits in a QEC cycle just before readout might seem as leading to an increased effective readout error due to decoherence during the additional time between the end of the coherent gate part and the auxiliary qubit readout, but operating the LRU anywhere else in the QEC cycle would introduce the same errors contributing in the exact same way to the auxiliary qubit error per cycle.

If the LRU is applied to the data qubits D1, D2, another location of the LRU within the QEC cycle may be more favorable. The choice of location within the QEC cycle may be made, e.g., with a view to minimizing cycle length. Ideally, the LRU for a data qubit is applied directly after an operation which might induce leakage. As indicated in Fig. 14, the LRUs for the different qubits do not need to be carried out simultaneously.

Figs. 15 and 16 illustrate experimental results obtained from stabilizer measurements as illustrated in Fig. 14, wherein the LRU was applied to the auxiliary qubit A only, and no LRU was applied to the data qubits D1, D2.

Fig. 15 shows the leakage population on the auxiliary qubit A with the LRU (lower trace) and without the LRU (upper trace) as a function of the number of stabilizer cycles. Without the LRU, leakage errors accumulate and result in a large steady state leakage population of more than 3%. Such behavior can corrupt any quantum computation even with error correction in place. In contrast, operating the LRU on the auxiliary qubit A keeps its leakage population at a very low value, restoring the effectiveness of error correction protocols and thus enabling scalable fault-tolerant quantum computing.

Fig. 16 shows the effect of the LRU applied to the auxiliary qubit A on the data qubits D1 (triangles) and D2 (circles). Although the LRU is applied only to the auxiliary qubit A, leakage on the data qubits D1, D2 is also reduced. This may indicate leakage "transport" between the data qubits D1, D2 and the auxiliary qubit A.

Potential extensions

The LRU protocol can be extended to deplete populations of further leakage states, in particular, higher-excited states in a superconducting qubit comprising a SQUID loop, in particular, a transmon qubit. E.g. to deplete the third excited qubit state $|h\rangle$, one can execute two sequential operations, the first one reducing $|h\rangle$ to $|f\rangle$ by coupling the state $|h, 0\rangle$ to $|f, 1\rangle$, and the second one being the standard LRU described above, which may be called an "$|f\rangle$) state LRU". If a resonator photon is present after the first operation, the second operation couples the states $|f, 1\rangle$ and $|e, 2\rangle$, for which the coupling strength is increased by a factor $\sqrt{2}$ (see Appendix A), resulting in only a partial reduction of $|f\rangle$ to $|e\rangle$. A waiting time between the two operations increases the probability of starting the second operation with the state $|f, 0\rangle$ and thus increases the probability of the final qubit state being $|e\rangle$. In practice, one has to balance the errors introduced by an imperfect second operation against the errors associated with an additional waiting time. The two sequential operations, separated by a potential waiting time, may be referred to as an "$|h\rangle$ state LRU". Analogously, even higher excited transmon states can be depleted and reduced to the computational subspace in a sequential manner.

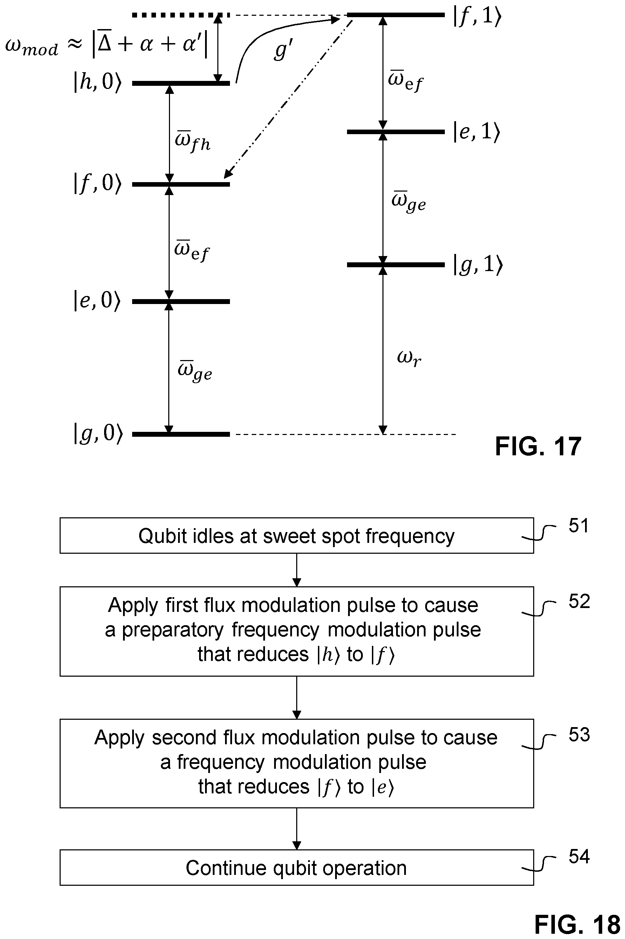

Fig. 17 shows an energy level diagram to illustrate the working principle of an $|h\rangle$ state LRU. A first flux modulation pulse causes a first frequency modulation pulse, which may be called a "preparatory pulse" because it prepares the qubit for application of the standard $|f\rangle$ state LRU. During the preparatory pulse, the qubit frequency is parametrically modulated at a frequency of $\omega'_{mod} = |\overline{\omega}_{fh} - \omega_r| \approx |\overline{\Delta} + \alpha + \alpha'|$ with $\alpha' = \omega_{fh} - \omega_{ef}$, where $\overline{\omega}_{fh}$ designates the frequency spacing between the states $|f\rangle$ and $|h\rangle$ during the preparatory pulse and $\omega_{fh}$ designates said frequency spacing in the absence of frequency modulation. This causes a time-dependent parametric coupling $g'(t)$ between the states $|h, 0\rangle$ and $|f, 1\rangle$,

which leads to population transfer between these states to reduce $|h\rangle$ to $|f\rangle$. Subsequently, the standard $|f\rangle$ state LRU is applied to reduce $|f\rangle$ to $|e\rangle$.

Fig. 18 shows a corresponding flow diagram. In step 51, the qubit idles at a sweet spot frequency. In step 52, a first flux modulation pulse is applied, causing the preparatory frequency modulation pulse that reduces $|h\rangle$ to $|f\rangle$. In step 53, a second flux modulation pulse is applied, causing the frequency modulation pulse that reduces $|f\rangle$ to $|e\rangle$. In step 54, qubit operation continues.

In a similar manner, still higher excited states can be sequentially reduced to the next lowerlying state until finally $|f\rangle$ is reduced to $|e\rangle$.

In some embodiments, running $|f\rangle$ state and $|h\rangle$ state LRUs may be sufficient because in general leakage to higher excited states is less likely and because the natural energy relaxation time of higher excited states is shorter. Given the reduced probability of having a leaked $|h\rangle$ state compared to a leaked $|f\rangle$ state, a good strategy will be to only make every m-th LRU operation an $|h\rangle$ state LRU, with $m$ being an integer between 2 and 20. Applied to QEC, this means e.g. executing $|f\rangle$ state LRUs in each of (m - 1) QEC cycles and an Ih) state LRU in the m-th cycle, and repeat.

For detunings between a qubit transition frequency and the resonator mode which is too large to be driven with the finite bandwidth of an AWG device, one can use a higher sideband (harmonic) with order $n$, in particular the second harmonic, to reduce a leakage state, see Appendix A. This reduces the required modulation frequency by a factor $n$ compared to using the first harmonic. For example, for the standard LRU driven with the second harmonic, the resonance condition is $\omega_{mod} = 2\omega_{\mathrm{p}} = |\overline{\omega_{ef}} - \omega_{\mathrm{r}}|/2$.

Furthermore, due to the nonlinearity of the transfer function from magnetic flux to qubit frequency, $\omega_{ge}(\Phi) = f(\Phi)$, the qubit frequency is modulated not only at $2\omega_{\mathrm{p}}$ but also at higher harmonic frequencies, specifically, at even harmonics, e.g., at $4\omega_{\mathrm{p}}$, $6\omega_{\mathrm{p}}$,..., see Appendix A for details. The Fourier coefficients of these higher harmonics increase with increasing $\delta\omega$. This has two disadvantages: First, less power is channeled into the intended sideband series resulting from modulation at $2\omega_{\mathrm{p}}$, and second, higher sidebands may be resonant with defect modes on the device, thus leading to decoherence, or interact with neighboring qubits. As a solution, the waveform generator may be programmed to generate the flux modulation function $\Phi(t)$ such that the resulting frequency modulation occurs only at $2\omega_{\mathrm{p}}$. E.g. to realize

$$\omega_{ge}(t) = \omega_{ge}^{max} - \delta\omega - \delta\omega\cos(2\omega_{\mathrm{p}}t + 2\theta_{\mathrm{p}})$$

, one may set $\Phi(t) = f^1(\omega_{ge}(t))$, with $f^1(\omega_{ge})$ the inverse function of $f(\Phi)$, from which the right branch ($\Phi > 0$) is used for $(2k\pi - \pi) \le (2\omega_{\mathrm{p}}t + 2\theta_p) \le (2(k + 1)\pi - \pi)$ with $k$ an even integer, and the left branch ($\Phi < 0$) for $(2k\pi - \pi) < (2\omega_{\mathrm{p}}t + 2\theta_p) < (2(k + 1)\pi - \pi)$ with $k$ an odd integer.

In Appendix A it will be shown that to realize the idealized interaction pulses described in the main text, not only a time-dependent modulation amplitude $\delta\omega(t)$ is required, but also a time-dependent modulation frequency $\omega_{\mathrm{p}}(t)$. This is to make the targeted transition fully resonant during each part of the frequency modulation pulse, i.e. also during its rising and falling edges. This can in principle be implemented when programming the flux modulation pulse on the waveform generator. However, to a good approximation, the same effective interaction can be realized with a constant $\omega_{\mathrm{p}}$ and a slight adjustment of the duration or exact modulation frequency of the pulse.

In case more freedom is needed for the choice of $\kappa$, one could use a dedicated resonator circuit for the operation of the LRU, distinct from the readout circuit.

Appendix A: Extended modeling of qubit frequency modulation and higher harmonics

In the above discussion, a small frequency modulation amplitude $\delta\omega \ll \omega_{ge}$ was assumed, which entails an approximately sinusoidal qubit frequency modulation. Within that approximation only the dominant first sideband was considered, whose weight is proportional to the first Bessel function of the first kind $J_1(\delta\omega)/2\omega_{\mathrm{p}})$, which is valid for small modulation indices $\delta\omega/2\omega_{\mathrm{p}}$. In the following, the general case is treated. Expressions will be derived for the higher sidebands proportional to higher-order Bessel functions of the first kind, which can be used to couple a resonator mode and a qubit leakage state for detunings too large to reach with the first sideband, given the finite bandwidth of an AWG device. In addition, the effects of the nonlinearity of the transfer function $\omega_{ge}(\Phi)$, which also generates higher harmonics in the qubit frequency spectrum, will be discussed.

The waveform generator device creates a current pulse, with some envelope and modulation (carrier) frequency $\omega_{\mathrm{p}}$, or equivalently, a voltage pulse which is transformed into an effective current pulse with a set of one or more resistors. The current pulse inductively couples to the SQUID loop of the qubit, resulting in a magnetic flux pulse in the SQUID loop,

$$\Phi(t) = \Phi_{\mathrm{bias}} + \delta\Phi(t)\cos(\omega_{\mathrm{p}}t + \theta_{\mathrm{p}}), \qquad (13)$$

with the flux pulse envelope function $\delta\Phi(t)$ and a DC bias flux $\Phi_{bias}$.

The flux-to-qubit frequency transfer function for a transmon qubit with an asymmetric SQUID is approximately given by

$$\omega_{ge} = f(\Phi) \approx \sqrt{8E_J(\Phi)E_C}/\hbar - E_C/\hbar, \qquad (14)$$

with the charging energy $E_C$ of the qubit and the total Josephson energy

$$E_J(\Phi) = E_{J\Sigma}|\cos(\pi\Phi/\Phi_0)|\sqrt{1 + d^2\tan^2(\pi\Phi/\Phi_0)}, \qquad (15)$$

where $E_{J\Sigma} = E_{J,1} + E_{J,2}$ is the sum of the two Josephson energies of the two junctions and $d = |E_{J,2} - E_{J,1}|E_{J\Sigma}$ the junction asymmetry. Eq. (14) is an approximation valid in the transmon regime $E_J(\Phi) \gg E_C$. An example of $\omega_{ge}(\Phi)$ is plotted in Fig. 2 as a solid line.

For slowly varying flux pulse envelope functions $\delta\Phi(t)$, the resulting qubit frequency modulation $\omega_{ge}(\Phi(t)) = \omega_{ge}(t)$ can be expressed as a Fourier series with time-dependent Fourier coefficients,

$$\omega_{ge}(t) = \overline{\omega}_{ge}(t) + \sum_{k=1}^{\infty} A_k(t)\cos(k(\omega_p t + \theta_p)), \qquad (16)$$

with the average qubit frequency and the $k$-th Fourier coefficient, respectively, given by

$$\overline{\omega}_{ge}(t) = \frac{\omega_p}{2\pi} \int_{-\pi/\omega_p}^{\pi/\omega_p} dt' \, \omega_{ge}(t + t') \qquad (17)$$

$$A_k(t) = \frac{\omega_p}{\pi} \int_{-\frac{\pi}{\omega_p}}^{\frac{\pi}{\omega_p}} dt' \, \cos(k(\omega_p(t + t') + \theta_p))\omega_{ge}(t + t') \qquad (18)$$

For the qubit idling at its maximum or minimum frequency, the odd Fourier coefficients are zero, and the leading coefficient is $A_2(t)$. Furthermore, for low modulation amplitude $\delta\omega \ll \omega_{ge}$ one obtains $A_2(t) \approx \mp\delta\omega(t)$ depending on whether the qubit idles at its maximum or minimum frequency.

In general, each of the terms in the Fourier series creates a series of sidebands $n = \pm 1, \pm 2, \ldots$, spaced $k\omega_p n$ from the average qubit frequency. Transitions between tensor product states of qubit and resonator states can have contributions from multiple sidebands and result from a combination of sidebands.

In the following, the effect of the leading term $A_2(t)$ will be focused on. The qubit sidebands effectively lead to the following interaction Hamiltonian, describing the interaction between the qubit under frequency modulation and the resonator mode,

$$H_{int} = g_{qr} \sum_{n=-\infty}^{\infty} J_n\left(\frac{A_2(t)}{2\omega_p}\right) e^{-i(2\omega_p nt + \beta_n(t))}$$

$$\times [e^{-i\overline{\Delta}_{ge}(t)t}|g, 1\rangle\langle e, 0|$$

$$+\sqrt{2}e^{-i\overline{\Delta}_{ef}(t)t}|e, 1\rangle\langle f, 0|$$

$$+\sqrt{3}e^{-i\overline{\Delta}_{fh}(t)t}|f, 1\rangle\langle h, 0|$$

$$+\ldots] + \text{h.c.},$$

$$(19)$$

with a phase

$$\beta_n(t) = 2n\theta_{\mathrm{p}} - (A_2(t)/2\omega_{\mathrm{p}})\sin(2\theta_{\mathrm{p}}), \qquad\qquad (20)$$

the third excited qubit state $|h\rangle$, and the detunings $\overline{\Delta}_{ge}(t) = \overline{\Delta}(t) = \overline{\omega}_{ge}(t) - \omega_{\mathrm{r}}$, $\overline{\Delta}_{ef}(t) = \overline{\omega}_{ef}(t) - \omega_{\mathrm{r}}$, $\overline{\Delta}_{fh}(t) = \overline{\omega}_{fh}(t) - \omega_{\mathrm{r}}$, with $\overline{\omega}_{fh}$ the transition frequency between the states $|f\rangle$ and $|h\rangle$ during qubit flux modulation. The rotating wave approximation was applied, neglecting fast-rotating terms. Furthermore, for the resonator mode, for clarity, only terms describing transitions between its ground and excited state have been included. Transitions between higher resonator Fock states can be straightforwardly included, e.g. the line describing the interaction between the states $|e\rangle$ and $|f\rangle$ could be expanded to include

$$\sqrt{2}\mathrm{e}^{-i\overline{\Delta}_{ef}t}\sqrt{2}|e,2\rangle\langle f,1| + \sqrt{2}\mathrm{e}^{-i\overline{\Delta}_{ef}t}\sqrt{3}|e,3\rangle\langle f,2| + \ldots$$

To make a transition resonant using the $n$-th harmonic, $\omega_{\mathrm{p}}$ should be chosen such that

$$2\omega_{\mathrm{p}}n + \overline{\Delta}_{xy}(t) = 0, \qquad\qquad (21)$$

with $x$ and $y$ labeling two qubit states adjacent in energy, see the terms in Eq. (19). In principle, to match the time-dependence of $\overline{\Delta}_{xy}(t)$, $\omega_{\mathrm{p}}$ needs to have a corresponding time-dependence as well, which can be programmed on a waveform generator. However, typical envelope functions are rectangular pulses convolved with a filter kernel function significantly narrower than the duration of the pulse. Hence, it is simple and efficient to set $\omega_{\mathrm{p}}$ such that the resonance condition is met for the main (flat) part of the pulse. Experimentally, potential errors associated with effectively off-resonant drives at the beginning and end of the pulse, such as a finite leakage population after the LRU operation, can be compensated by adjusting the duration and precise modulation frequency $\omega_{\mathrm{p}}$ of the flux modulation pulse. Hence, for the remainder, the time-dependence of $\overline{\Delta}_{xy}$ will be ignored. With a similar argument we ignore the time-dependence of $\beta_n$.

The prefactors of the terms with $|e, 1\rangle\langle f, 0|$ in Eq. (19) are the coupling strengths for an LRU operation driven with the $n$-th harmonic. Ignoring the global phase $\beta_n$, one obtains:

$$g^{(n)}(t) = \sqrt{2}g_{\mathrm{qr}}J_n\left(\frac{A_2(t)}{2\omega_{\mathrm{p}}}\right), \qquad\qquad (22)$$

This expression was called an "interaction pulse" in the discussion above; however, only the use of the first harmonic $n = \pm 1$ was discussed, with the plus sign corresponding to negative $\overline{\Delta}$. Without loss of generality we assume $\overline{\Delta} < 0$ for the remainder. Using the first harmonic and, in particular, for small modulation index $A_2(t)/2\omega_{\mathrm{p}} \ll 1$, one can approximate $J_1(A_2(t)/2\omega_{\mathrm{p}}) \approx A_2(t)/4\omega_{\mathrm{p}}$. Furthermore for small modulation amplitude $\delta\omega$, one can approximate $A_2(t) \approx \mp\delta\omega(t)$. With these approximations, and ignoring a potential global phase,

$$g^{(1)}(t) = g(t) \approx \sqrt{2}g_{\mathrm{qr}}\frac{\delta\omega(t)}{4\omega_{\mathrm{p}}}, \qquad\qquad (23)$$

which is the time-dependent version of Eq. (5) if the resonance condition $2\omega_{\mathrm{p}} = -\overline{\Delta}_{ef} = -(\overline{\omega}_{ge} + \alpha - \omega_{\mathrm{r}}) = -(\Delta + \delta\omega + \alpha)$ is applied.

Furthermore, Eq. (19) and Eq. (20) reveal that realizing a quadrature component in g(t) requires to add another flux modulation drive with a phase $\theta_{\mathrm{p}}^{(q)}$ set to realize $\beta_n^{(q)} = \beta_n + \pi/2$.

Appendix B: Time dynamics under the single-mode Hamiltonian

The non-Hermitian Hamiltonian Eq. (6) has eigenvalues

$$\lambda_{1,2} = -i\,\kappa/4 \pm \sqrt{g^2 - (\kappa/4)^2} \qquad\qquad (24)$$

and eigenstates

$$|\psi_{1,2}\rangle = \frac{1}{\sqrt{2}}\left(-i\,\kappa/4g \mp \sqrt{1-(\kappa/4g)^2}\right)|f,0\rangle + \frac{1}{\sqrt{2}}\,|g/e,1\rangle. \tag{25}$$

The general solution of the Schrödinger equation $i\,\partial_t\,|\psi(t)\rangle = H\,|\psi(t)\rangle$ is thus

$$|\psi(t)\rangle = A_1\,|\psi_1\rangle\exp(-i\lambda_1 t) + A_2\,|\psi_2\rangle\exp(-i\lambda_2 t). \tag{26}$$

One is interested in the time evolution of the initial state $|\psi(t = 0)\rangle = |f, 0\rangle$, in which case $A_1 = -A_2 = 1/\left(\sqrt{2}\sqrt{1-(\kappa/4g)^2}\right)$. The populations $P_{|f,0\rangle}(t) = |\langle f, 0|\psi(t)\rangle|^2$ and $P_{|e,1\rangle}(t) = |\langle e, 1|\psi(t)\rangle|^2$ in the underdamped regime $\kappa < 4g$ are then calculated as

$$P_{|f,0\rangle}(t) = \exp(-\kappa t/2)\cos^2\!\left(\sqrt{g^2-(\kappa/4)^2}\,t-\theta\right), \tag{27}$$

$$P_{|e,1\rangle}(t) = \frac{1}{1-(\kappa/4g)^2}\exp(-\kappa t/2)\sin^2\!\left(\sqrt{g^2-(\kappa/4)^2}\,t\right). \tag{28}$$

With increasing $\kappa/g$, the oscillation frequency $2\sqrt{g^2-(\kappa/4)^2}$ decreases and the phase shift $\theta$ (Eq. (8)) increases, both contributing to the increase of $t_{LRU}$ with $\kappa/g$, see Fig. 8. The phase shift in the evolution of $P|_{f,0\rangle}(t)$ mathematically results from the corresponding finite imaginary part of the eigenstates, Eq. (25).

To calculate the residual population of the state $|e, 1\rangle$ after the LRU operation, $P_{|e,1\rangle}(t = t_{LRU})$, the identity $\cos(\arctan(x)) = 1/\sqrt{1-x^2}$ may be used, leading to Eq. (9).

Appendix C: Resonant time dynamics with a two-mode readout circuit model

For a general description of the resonant time dynamics of the LRU, the readout resonator and Purcell filter modes should be explicitly considered in the Hamiltonian, as was done already for computing the off-resonant time dynamics above. The two-mode interaction Hamiltonian in the basis $|f, 0\rangle$, $|e, 1\rangle$ and $|e, 1P\rangle$ reads

$$H_{2m} = \begin{pmatrix} 0 & g^*(t)e^{-i\delta t} & 0 \\ g(t)e^{i\delta t} & 0 & J \\ 0 & J & -i\,\kappa_P/2 \end{pmatrix}. \tag{29}$$

For a coupled readout resonator-Purcell filter system, the effective linewidth of the readout resonator close to resonance can be approximated by $\kappa = 4J^2/\kappa_P$ if $\kappa_P$ is significantly larger than $J$. In that case the Purcell filter mode can be adiabatically eliminated and the readout circuit behaves like a single resonator with an effective linewidth $\kappa$. Conversely, for a strong coupling of the readout resonator and the Purcell filter, $J \gtrsim \kappa_P$, two approximately independent modes are obtained, split in frequency by ~ $2J$. In this case, a single-mode description is possible if the parametric coupling of the qubit is restricted to one of the modes. In an intermediate regime one has to include both the readout resonator and the Purcell filter modes explicitly in the Hamiltonian, as in Eq. (29). In the presence of the engineered coupling $g(t)$, which couples the qubit and the readout resonator, the situation is more complex because the persistence of the above mode pictures depends on the magnitude of $g$.

The regime focused on here is close to the single-mode regime ($\kappa_P$ significantly larger than $J$) to avoid cross-coupling effects of both the LRU and readout operations due to the presence of a second mode. Furthermore, $g$ is sufficiently large to ensure that the main hybridization occurs between qubit and readout resonator, ensuring access to the underdamped regime. To realize the target effective linewidth $\kappa/2\pi = 12$ MHz, ony may choose $J/2\pi = 11.0$ MHz and $\kappa_P/2\pi = 40$ MHz, which is a compromise between being in the single-mode regime and having a sufficiently small $\kappa_P$ to

efficiently suppress Purcell-induced decay during the LRU operation.

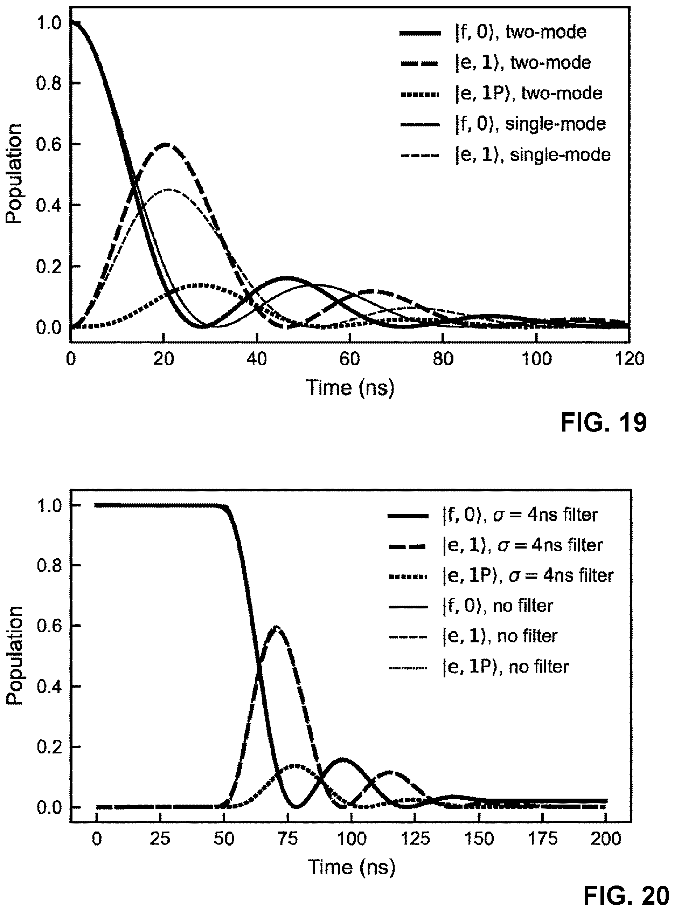

The time evolution with these parameters under the Hamiltonian Eq. (29) is qualitatively very similar to the one under the single-mode Hamiltonian Eq. (6). This is illustrated in Fig 19, which compares the resonant time dynamics of an LRU for two-mode and single-mode modeling of the readout circuit. In the two-mode model, the leakage population reaches its first zero even faster than in the single-mode model. Deviations are due to the finite ratio $\kappa_P/J$, due to which the dynamics in the Purcell filter still play some role.

It was also verified that the resonant dynamics of the LRU does not depend on the details of the rising and falling edges of the interaction pulse as long as a single effective readout mode is present, which is the case for the parameters presented above. This is illustrated in Fig. 20, which compares the time dynamics when instantaneously switching on and off the LRU interaction, corresponding to a rectangular interaction pulse, and a rectangular interaction pulse filtered with a Gaussian with a width of $\sigma$ = 4 ns. Both types of pulses lead to almost identical dynamics.

Modifications

While exemplary embodiments of the invention have been disclosed above, the invention ist not limited to these embodiments, and various modifications are possible. In particular, the invention is not limited to a particular type of qubit as long as it is possible to modulate the qubit frequency by some suitable mechanism.

For example, the qubit may be a so-called "fixed-frequency qubit" comprising only one single Josephson junction, whose frequency cannot readily be modulated by flux modulation. In such cases, modulation of the qubit frequency may be caused by another mechanism than by flux modulation. For example, the qubit frequency may be modulated by an amplitude-modulated off-resonant microwave drive via the AC Stark effect.

In other embodiments, the qubit may be a gatemon-type qubit. A gatemon is a transmon variant that employs locally gated nanowire superconductor-semiconductor Josephson junctions for qubit control (T.W. Larsen et al., "A semiconductor nanowire-based superconducting qubit", Phys. Rev. Lett. 115, 127001 (2015); G. de Lange et al., "Realization of microwave quantum circuits using hybrid superconducting-semiconducting nanowire Josephson elements", Phys. Rev. Lett. 115, 127002 (2015)). In such qubits, the qubit frequency can be electrically tuned with a gate electrode.

In yet other embodiments, the qubit may be a semiconductor charge qubit (see e.g. Chatterjee et al. "Semiconductor qubits in practice". Nature Reviews Physics 3, 157 (2021)) or a semiconductor spin qubit (see, e.g., G. Burkard et al., "Semiconductor spin qubits", arXiv:2112.08863).

Many other modifications are possible.

**Claims**

1. An apparatus, comprising:

    a qubit (100) facilitating occupation of at least one of a plurality of qubit states, the qubit states including two computational states ($|g\rangle$, $|e\rangle$) and a first leakage state ($|f\rangle$), the computational states including a qubit ground state ($|g\rangle$) and a first excited qubit state ($|e\rangle$), wherein the first excited qubit state ($|e\rangle$) is spaced from the qubit ground state ($|g\rangle$) by a qubit frequency ($\omega_{ge}$), and wherein the first leakage state ($|f\rangle$) is spaced from the first excited qubit state ($|e\rangle$) by a frequency spacing that is different from the qubit frequency ($\omega_{ge}$);
    a resonator structure (200) coupled to the qubit (100), the resonator structure (200) having a resonator mode at a resonator frequency ($\omega_r$);
    a frequency modulation device (300) coupled to the qubit (100), the frequency modulation device (300) being configured to apply a frequency modulation pulse to the qubit (100), the frequency modulation pulse causing a periodic modulation of the qubit frequency ($\omega_{ge}$),
    wherein the frequency modulation device (300) is configured to apply the frequency modulation pulse in such a manner that population transfer between the first leakage state ($|f\rangle$) and the first excited qubit state ($|e\rangle$) is facilitated while population transfer between the computational states ($|g\rangle$, $|e\rangle$) is suppressed.

2. The apparatus of claim 1,

    wherein the frequency modulation device (300) is configured to apply the frequency modulation pulse in such a manner that the frequency modulation pulse induces a time-dependent parametric coupling between a first tensor product state ($|f, 0\rangle$) and a second tensor product state ($|e, 1\rangle$), wherein in the first tensor product state ($|f, 0\rangle$), the first leakage state is occupied and the resonator mode is not populated with any photons or populated with a finite number of photons, and in the second tensor product state ($|e, 1\rangle$), the first excited qubit state is occupied and the resonator mode is populated with one additional photon as compared to the first tensor product

state ($|f, 0\rangle$),
in particular, wherein the frequency modulation device (300) is configured to apply the frequency modulation pulse in such a manner that the qubit frequency ($\omega_{ge}$) is modulated with a qubit modulation frequency ($\omega_{mod}$), the qubit modulation frequency ($\omega_{mod}$) being determined according to a difference between the resonator frequency ($\omega_r$) and a time-averaged frequency spacing ($\overline{\omega_{ef}}$) between the first leakage state ($|f\rangle$) and the first excited qubit state ($|e\rangle$) during the frequency modulation pulse.

3. The apparatus of claim 2,

wherein the frequency modulation device (300) is configured to apply the frequency modulation pulse as a shaped pulse, the frequency modulation pulse being shaped in such a manner that a bandwidth of the time-dependent parametric coupling is reduced, in particular, in such a manner that a spectral component of the time-dependent parametric coupling is reduced at a detuning frequency that would induce a resonant parametric coupling between a third tensor product state ($|e, 0\rangle$) and a fourth tensor product state ($|g, 1\rangle$), wherein in the third tensor product state ($|e, 0\rangle$), the first excited qubit state is occupied and the resonator mode is not populated with any photons or populated with a finite number of photons, and in the fourth tensor product state ($|g, 1\rangle$), the qubit ground state is occupied and the resonator mode is populated with one additional photon as compared to the third tensor product state ($|e, 0\rangle$),
in particular, wherein the frequency modulation pulse is shaped such that the time-dependent parametric coupling is a shaped interaction pulse corresponding to a convolution of a rectangular interaction pulse with a filter kernel, the filter kernel preferably having a real component and a non-zero imaginary component, in particular an imaginary component that is proportional to a derivative of the real component,
wherein in particular the real component is a Gaussian real component.

4. The apparatus of any one of the preceding claims,

wherein the frequency modulation device (300) is configured to apply the frequency modulation pulse in such a manner that, starting from an initial tensor product state in which the first leakage state ($|f\rangle$) is occupied and the resonator mode is not excited, an occupation probability of the first leakage state ($|f\rangle$) exhibits an underdamped oscillation as a function of time during the frequency modulation pulse, and
wherein the frequency modulation pulse has a duration ($t_{LRU}$) that is determined according to a time duration required for causing said underdamped oscillation to reach a first minimum as a function of time.

5. The apparatus of any one of the preceding claims, wherein the qubit (100) is a superconducting qubit.

6. The apparatus of claim 5,

wherein the qubit (100) comprises a superconducting loop (110), and
wherein the frequency modulation device (300) comprises a flux line (310) for modulating a magnetic flux ($\Phi$) through the superconducting loop (110), the modulation of the magnetic flux ($\Phi$) through the superconducting loop (110) causing the periodic modulation of the qubit frequency ($\omega_{ge}$),
in particular, wherein the frequency modulation device (300) comprises a waveform generator (320) coupled to the flux line (310), the waveform generator (320) being configured to generate a flux modulation pulse, the flux modulation pulse causing the frequency modulation pulse,
more particularly, wherein the frequency modulation device (300) is configured to modulate the magnetic flux ($\Phi$) through the superconducting loop (110) symmetrically around a reference flux at which the qubit frequency ($\omega_{ge}$) has a local maximum or a local minimum as a function of the magnetic flux ($\Phi$) through the superconducting loop (110).

7. The apparatus of claim 6,
wherein the superconducting loop (110) is a SQUID loop, in particular, an asymmetric SQUID loop comprising a first Josephson junction (111) having a first Josephson energy and a second Josephson junction (112) having a second Josephson energy, the second Josephson energy being different than the first Josephson energy.

8. The apparatus of any one of the preceding claims, wherein the frequency modulation pulse causes the qubit frequency ($\omega_{ge}$) to be modulated with a modulation amplitude ($\delta\omega$) that is not more than 10% of a time-averaged qubit frequency ($\overline{\omega_{ge}}$) during the frequency modulation pulse, the modulation amplitude ($\delta\omega$) being defined as half the difference between a maximum qubit frequency ( $\omega_{ge}^{max}$ ) and a minimum qubit frequency( $\omega_{ge}^{min}$ ) during the frequency modulation pulse.

9.  The apparatus of any one of the preceding claims, wherein the resonator structure (200) comprises a readout resonator (210) coupled to the qubit and a Purcell filter (220) coupled to the readout resonator (210).

10. The apparatus of any one of the preceding claims, comprising a dissipative element coupled to the resonator structure (200).

11. The apparatus of any one of the preceding claims, wherein the frequency modulation device (300) is configured to apply a preparatory pulse to the qubit (100) before application of the frequency modulation pulse, the preparatory pulse causing a periodic modulation of the qubit frequency ($\omega_{ge}$) in such a manner that population transfer between a second leakage state ($|h\rangle$) and the first leakage state ($|f\rangle$) is facilitated while population transfer between the computational states ($|g\rangle$, $|e\rangle$) is suppressed.

12. A method in an apparatus comprising a qubit (100) and a resonator structure (200) coupled to the qubit (100),

> the qubit (100) facilitating occupation of at least one of a plurality of qubit states, the qubit states including two computational states ($|g\rangle$, $|e\rangle$) and a first leakage state ($|f\rangle$), the computational states including a qubit ground state ($|g\rangle$) and a first excited qubit state ($|e\rangle$), wherein the first excited qubit state ($|e\rangle$) is spaced from the qubit ground state ($|g\rangle$) by a qubit frequency ($\omega_{ge}$), and wherein the first leakage state ($|f\rangle$) is spaced from the first excited qubit state ($|e\rangle$) by a frequency spacing that is different from the qubit frequency (Wge),
> the resonator structure (100) having a resonator mode at a resonator frequency ($\omega_r$),
> the method comprising:
>
>> applying a frequency modulation pulse to the qubit (100), the frequency modulation pulse causing a periodic modulation of the qubit frequency ($\omega_{ge}$),
>> wherein the frequency modulation pulse is applied in such a manner that population transfer between the first leakage state ($|f\rangle$) and the first excited qubit state ($|e\rangle$) is facilitated while population transfer between the computational states ($|g\rangle$, $|e\rangle$) is suppressed.

13. A method for quantum error correction, the method comprising:

> coherently manipulating a plurality of qubits (100) comprising at least one data qubit (D1, D2) and at least one auxiliary qubit (A), each of the qubits (100) being coupled to a resonator structure (200); and
> applying the method of claim 12 to at least one of the qubits (100),
> wherein the method optionally further comprises applying a Z-gate to said at least one qubit to compensate for deterministic phase errors acquired during application of the method for leakage reduction.

14. The method of claim 13, comprising:

> reading out the at least one auxiliary qubit (A),
> wherein the frequency modulation pulse of claim 12 is applied to the at least one auxiliary qubit (A) immediately before the at least auxiliary qubit (A) is read out.

15. The method of claim 13 or 14, wherein at least one of the qubits (100) is further manipulated after the frequency modulation pulse of claim 12 has been applied, further manipulation starting within a time period after the frequency modulation pulse that is shorter than a decay time of the resonator mode.

**FIG. 1**

**FIG. 2**

$|f, 0\rangle$     $|\bar{\Delta} + \alpha|$     $g$     $|e, 1\rangle$

$|\alpha|$

$|\bar{\Delta}|$     $|g, 1\rangle$

$|e, 0\rangle$     $\bar{\omega}_{ge}$

$\bar{\omega}_{ge}$

$\omega_r$

$|g, 0\rangle$

**FIG. 3**

| | |
|---|---|
| Qubit idles at sweet spot frequency | 41 |

| | |
|---|---|
| Apply flux modulation pulse to cause a frequency modulation pulse that reduces $|f\rangle$ to $|e\rangle$ | 42 |

| | |
|---|---|
| Continue qubit operation | 43 |

**FIG. 4**

FIG. 5

FIG. 6

**FIG. 7**

**FIG. 8**

σ = 1 ns

FIG. 9A

σ = 4 ns

FIG. 9B

FIG. 10

FIG. 11

FIG. 12

FIG. 13

**FIG. 14**

**FIG. 15**

**FIG. 16**

$$\omega_{mod} \approx |\overline{\Delta} + \alpha + \alpha'|$$

$|h, 0\rangle$     $g'$     $|f, 1\rangle$

$\overline{\omega}_{fh}$

$\overline{\omega}_{ef}$

$|f, 0\rangle$     $|e, 1\rangle$

$\overline{\omega}_{ef}$

$\overline{\omega}_{ge}$

$|e, 0\rangle$     $|g, 1\rangle$

$\overline{\omega}_{ge}$

$\omega_r$

$|g, 0\rangle$

**FIG. 17**

Qubit idles at sweet spot frequency — 51

Apply first flux modulation pulse to cause a preparatory frequency modulation pulse that reduces $|h\rangle$ to $|f\rangle$ — 52

Apply second flux modulation pulse to cause a frequency modulation pulse that reduces $|f\rangle$ to $|e\rangle$ — 53

Continue qubit operation — 54

**FIG. 18**

FIG. 19

FIG. 20

Europäisches
Patentamt

European
Patent Office

Office européen
des brevets

# EUROPEAN SEARCH REPORT

Application Number

EP 23 15 9103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHOU YU ET AL: "Rapid and unconditional parametric reset protocol for tunable superconducting qubits", NATURE COMMUNICATIONS, [Online] vol. 12, no. 1, 11 October 2021 (2021-10-11), XP93058627, DOI: 10.1038/s41467-021-26205-y Retrieved from the Internet: URL:https://www.nature.com/articles/s41467-021-26205-y.pdf> [retrieved on 2023-06-28] * sections "Experimental realization" on page 3 and "Reset of the ¦f> state by two-tone parametric drive" on page 5; figures 1, 4 * | 1-15 | INV. G06N10/40 G06N10/70 |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 28 June 2023 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. KOCH et al.** Charge-insensitive qubit design derived from the Cooper pair box. *Physical Review A,* October 2007, vol. 76 (4
- **JOSÉ M. CHÁVEZ-GARCIA et al.** Weakly Flux-Tunable Superconducting Qubit. *Phys. Rev. Applied,* 2022, vol. 18, 034057
- **V. E. MANUCHARYAN et al.** Fluxonium: Single Cooper-Pair Circuit Free of Charge Offsets. *Science,* October 2009, vol. 326 (5949), 113
- **DAVID C. MCKAY et al.** *Phys. Rev. A,* 2017, vol. 96, 022330
- **M.D. REED et al.** Fast reset and suppressing spontaneous emission of a superconducting qubit. *Appl. Phys. Lett.,* 2010, vol. 96, 203110
- **HEINSOO et al.** Rapid High-fidelity Multiplexed Readout of Superconducting Qubits. *Phys. Rev. Applied,* 2018, vol. 10, 034040

- **S. KRINNER et al.** Realizing repeated quantum error correction in a distance-three surface code. *Nature,* 2022, vol. 605, 669
- **T.W. LARSEN et al.** A semiconductor nanowire-based superconducting qubit. *Phys. Rev. Lett.,* 2015, vol. 115, 127001
- **G. DE LANGE et al.** Realization of microwave quantum circuits using hybrid superconducting-semiconducting nanowire Josephson elements. *Phys. Rev. Lett.,* 2015, vol. 115, 127002
- **CHATTERJEE et al.** Semiconductor qubits in practice. *Nature Reviews Physics,* 2021, vol. 3, 157
- **G. BURKARD et al.** Semiconductor spin qubits. *arXiv:2112.08863*